(19) Europäisches Patentamt / European Patent Office / Office européen des brevets

(11) **EP 3 783 075 B1**

(12) **EUROPEAN PATENT SPECIFICATION**

(45) Date of publication and mention
of the grant of the patent:
**05.07.2023 Bulletin 2023/27**

(21) Application number: **20193840.4**

(22) Date of filing: **29.07.2016**

(51) International Patent Classification (IPC):
**C09D 143/04** $^{(2006.01)}$   **C09D 5/16** $^{(2006.01)}$
**C09D 157/00** $^{(2006.01)}$   **C09D 193/04** $^{(2006.01)}$

(52) Cooperative Patent Classification (CPC):
(C-Sets available)
**C09D 5/1668; C08F 230/08; C08F 230/085;**
**C09D 5/165; C09D 7/63; C09D 143/04;**
**C09D 193/04;** C08K 5/09   (Cont.)

(54) **ANTIFOULING COATING COMPOSITION, ANTIFOULING COATING FILM, ANTIFOULING SUBSTRATE, ROSIN COMPOUND FOR ANTIFOULING COATING COMPOSITION AND METHOD FOR PRODUCING ANTIFOULING COATING COMPOSITION**

BEWUCHSHEMMENDE BESCHICHTUNGSZUSAMMENSETZUNG, BEWUCHSHEMMENDER BESCHICHTUNGSFILM, BEWUCHSHEMMENDES SUBSTRAT, HARZVERBINDUNG FÜR BEWUCHSHEMMENDE BESCHICHTUNGSZUSAMMENSETZUNG UND VERFAHREN ZUR HERSTELLUNG VON BEWUCHSHEMMENDER BESCHICHTUNGSZUSAMMENSETZUNG

COMPOSITION DE REVÊTEMENT ANTISALISSURES, FILM DE REVÊTEMENT ANTISALISSURES, SUBSTRAT ANTISALISSURES, COMPOSÉ DE COLOPHANE DE COMPOSITION DE REVÊTEMENT ANTISALISSURES ET PROCÉDÉ DE PRODUCTION DE COMPOSITION DE REVÊTEMENT ANTISALISSURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2015 JP 2015152258**

(43) Date of publication of application:
**24.02.2021 Bulletin 2021/08**

(62) Document number(s) of the earlier application(s) in accordance with Art. 76 EPC:
**16832940.7 / 3 330 331**

(73) Proprietor: **Chugoku Marine Paints, Ltd.**
**Hiroshima 739-0652 (JP)**

(72) Inventors:
• **NIIMOTO, Jyunji**
**Hiroshima, 739-0652 (JP)**
• **HARADA, Shotaro**
**Hiroshima, 739-0652 (JP)**

• **IWATA, Yuki**
**Hiroshima, 739-0652 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 161 316        EP-A1- 2 781 567**
**WO-A1-2015/150249     JP-A- 2011 026 357**

EP 3 783 075 B1

(52) Cooperative Patent Classification (CPC): (Cont.)

C-Sets
**C08F 230/085, C08F 220/14, C08F 220/1804,
C08F 220/283;
C09D 143/04, C08K 3/22, C08L 93/04;
C09D 193/04, C08K 3/22, C08L 43/04**

## Description

Technical Field

The present invention relates to the use of a rosin compound for the preparation of an antifouling coating composition, a method for producing an antifouling coating composition, an antifouling coating composition, an antifouling coating film and an antifouling substrate.

Description of Related Art

To prevent adhesion of aquatic organisms to various substrates such as ships, underwater structures, and fishnets, research and development of antifouling coating (that is, antifouling coating composition) to be applied to a substrate has been advanced:).

WO 2013/073580 (EP-A-2 781 567) discloses a technique of setting each weight ratio of a component unit derived from triisopropylsilyl methacrylate, a component unit derived from triisopropylsilyl acrylate, and a component unit derived from a polymerizable monomer having a polymerizable double bond, to a predetermined ratio.

In JP-A-2005-015531, in addition to ester group-containing alicyclic hydrocarbon resin and/or hydroxyl group-containing alicyclic hydrocarbon resin, for example, triisopropylsilyl acrylate (TIPSI; hydrolyzable resin) is dissolved in e.g. xylene to make resin varnish, and e.g. hydrogenated rosin is added to the resin varnish to synthesize an acrylic resin varnish which is one type of hydrolyzable type resin.

JP-A-2005-082725disclosesan antifouling coating composition comprising as a vehicle component a silyl acrylic copolymer and a rosin compound made of e.g. triisopropylsilyl methacrylate, 2-methoxyethyl methacrylate or methyl methacrylate as a raw material.

JP-A-2010-150355 discloses a technique of producing copper salts of rosin or derivatives thereof in advance and using the copper salts for the antifouling coating composition in the absence of excess rosin or derivatives thereof.

WO 2015/150249 (EP-A-3 126 458) describes an erodible antifouling coating composition for prevent the adhesion and build-up of fouling agents on e.g. ships, which coating composition comprises an erodible binder system excluding a triorgano tin based binder; optionally, one or more antifouling agents; and at least one silicone oil. Also, a process for producing the composition, a substrate coated with the composition, and a process of coating a substrate with the composition are disclosed.

JP-A-2011-026357 relates to a contamination-proof coating composition including (A) a polymer having a Mn of 1,000-20,000 obtained by polymerizing a polymerizable unsaturated carboxylic acid tri-organo silyl and (B) at least one zinc salt selected from a rosin zinc salt and a zinc salt of a rosin derivative, in which the contamination-proof coating composition (1) has a weight ratio ((A)/(B)) of the content of (A) to that of (B) is 45/55-10/90, (2) has a content of non-volatile compound of ≥75 wt% and (3) is substantially free of a rosin and a rosin derivative having a free carboxyl group.

EP-A-2 161 316 discloses an antifouling coating composition containing (1) a triisopropylsilyl (meth)acrylate copolymer obtained by copolymerizing (a) 30-65 wt% of triisopropylsilyl (meth)acrylate, (b) 5-50 wt% of methyl methacrylate, and (c) 0-60 wt% of other (meth)acrylic ester; the copolymer having a Tg of 20-70°C and a Mn of 5,000-30,000; (2) at least one salt selected from rosin zinc salts, zinc salts of rosin derivatives, rosin copper salts and copper salts of rosin derivatives; and (3) a cuprous oxide, wherein the antifouling coating composition is substantially free from rosins and rosin derivatives containing one or more free carboxyl groups.

In each of the above patent documents, rosins (for example, residues remaining after distilling pine resin as a sap of a plant of Pineaceae) are used. The rosins contribute to the antifouling by quickly eluting an antifouling agent from an antifouling coating film made of the antifouling coating composition, and as a result, the static antifouling property can be improved (see [0051] of WO 2013/073580).

Summary of the Invention

Problem to be solved by the Invention

After intensive studies by inventors of the present invention regarding an antifouling coating composition using rosin, the inventors of the present invention obtain a knowledge that when using a natural resin rosin, despite being the same rosin, depending on the place of origin of rosin, viscosity of the antifouling coating composition before forming a coating film is greatly increased.

As a result of intensive studies by the inventors of the present invention based on the above knowledge by focusing on rosin and the techniques disclosed in each Patent Document described above, the inventors of the present invention obtain a knowledge that there are further points to be improved regarding long-term storage stability, long-term antifouling property, and long-term water resistance in the case of forming the coating film.

An object of the present invention is to provide an antifouling coating composition capable of suppressing increase of viscosity as compared with a prior art, having long-term storage stability and exhibiting excellent antifouling property and water resistance (long-term mechanical properties) when forming a coating film, and to provide a relevant technology.

Means for solving the Problem

Regarding the abovementioned problem, intensive studies are performed by the inventors of the present invention. After such studies by the inventors of the present invention, it is found that as shown in the items of examples described later, there are many points to be improved in the conventional technique in terms of long-term storage stability when viewed in several months, such as excellent antifouling property and water resistance (long-term mechanical properties), when forming a coating film (hereinafter these properties are collectively abbreviated as "each property" hereafter).

The cause of the above result is further studied by the inventors of the present invention, and as a result, the inventors of the present invention, although speculated, obtain a knowledge that under a situation of the antifouling coating composition and/or the coating film obtained therefrom, difference in properties (for example, difference in hardness) is increased between a copolymer having triorganosilyl group in the antifouling coating composition, and rosin or a rosin compound which is a derivative of rosin, and therefore the above improvement points are highlighted.

Based on the above knowledges, the inventors of the present invention added further studies. As a result, when employing a silylacrylic copolymer having a component unit derived from triisopropylsilyl (meth) acrylate, it is found that a very significant effect is produced as shown in the items of examples described later, by setting an acid value of the rosin compound to ≤ 180 (mg KOH/g) and making it a metal-free type.

Based on the abovementioned knowledges, aspects of the present invention are as follows.

Accordingly, the present invention provides a use of a rosin compound which is at least one of a rosin and a metal-free type rosin derivative, each having an acid value of ≤ 180 (mg KOH/g) for the preparation of an antifouling coating composition by blended with a silylacrylic copolymer (A) having a component unit derived from triisopropylsilyl (meth) acrylate (A1) and a component unit derived from a polymerizable monomer (A2) having a polymerizable double bond, wherein the silylacrylic copolymer (A) is contained in an amount of 10-30 parts by weight (pbw) in 100 pbw in total of the solid content (heating condition at 125°C/1h drying) contained in the antifouling coating composition.

Also, there is provided a method for producing an antifouling coating composition comprising mixing

- a silylacrylic copolymer (A) having a component unit derived from triisopropylsilyl (meth) acrylate (A1) and a component unit derived from a polymerizable monomer (A2) having a polymerizable double bond; and
- a rosin compound (B) which is at least one of a rosin and a metal-free type rosin derivative, each having an acid value of ≤ 180 (mg KOH/g),

wherein the silylacrylic copolymer (A) is contained in an amount of 10-30 parts by weight (pbw) in 100 pbw in total of the solid content (heating condition at 125°C/1h drying) contained in the antifouling coating composition.

Yet further, there is provided an antifouling coating composition comprising, blended with each other,

- a silylacrylic copolymer (A) having a component unit derived from triisopropylsilyl (meth) acrylate (A1) and a component unit derived from a polymerizable monomer (A2) having a polymerizable double bond; and
- a rosin compound (B) which is at least one of a rosin and a metal-free type rosin derivative, each having an acid value of ≤ 180 (mg KOH/g),

wherein the silylacrylic copolymer (A) is contained in an amount of 10-30 parts by weight (pbw) in 100 pbw in total of the solid content (heating condition at 125°C/1h drying) contained in the antifouling coating composition.

Even further, there is provided an antifouling coating film formed by curing the above-described antifouling coating composition and an antifouling substrate, wherein said antifouling coating film is formed on a substrate.

Preferred embodiments of the invention are as defined in the appended dependent claims and/or in the following detailed description.

Advantage of the Invention

According to the present invention, an antifouling coating composition capable of suppressing increase of viscosity as compared with a prior art, having long-term storage stability and exhibiting excellent antifouling property and water resistance (long-term mechanical properties) when forming a coating film, and to provide a relevant technology.

Brief description of the drawings

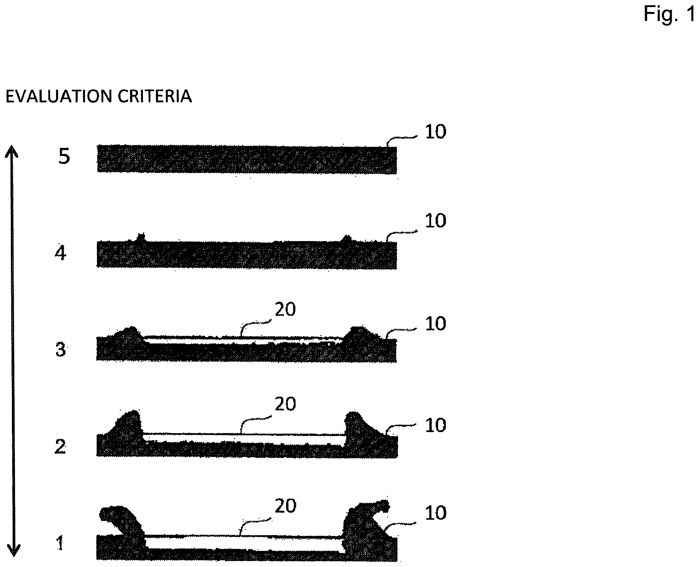

FIG. 1 is a schematic cross-sectional view showing a state of a coating film damage test (pressure test).

Detailed description of the Invention

An embodiment of the present invention will be described hereafter in the following order.

1. Each component constituting the antifouling coating composition
2. Method for producing the antifouling coating composition
3. Antifouling coating composition
4. Antifouling coating film and antifouling substrate
5. Effect of this embodiment

In the present specification, (meth) acrylic refers to at least one of acrylic and corresponding methacrylic.

Further, in the present specification, the ratio of weight refers to the ratio based on a solid content unless otherwise specified. For example, when a solvent is contained, a method showing weight% based on 100 wt% of the antifouling coating composition (including solvent) is employed.

Further, regarding contents not described in this specification, the contents of WO 2013/073580 by the present applicant may be suitably employed.

In addition, in this specification, "-" indicates a predetermined value or more and a predetermined value or less unless otherwise specified.

<1. Each component constituting the antifouling coating composition>

The antifouling coating of this embodiment, that is, the antifouling coating composition mainly includes the following components.

- A silyl acrylic copolymer (A) having a component unit derived from triisopropylsilyl (meth) acrylate (A1) and a component unit derived from a polymerizable monomer (A2) having a polymerizable double bond.
- A rosin compound (B) which is at least one of a rosin having an acid value of $\leq 180$ (mg KOH/g) and a metal-free type rosin derivative having an acid value of $\leq 180$ (mg KOH/g),

wherein the silylacrylic copolymer (A) is contained in an amount of 10-30 parts by weight (pbw) in 100 pbw in total of the solid content (heating condition at 125°C/1h drying) contained in the antifouling coating composition.

Each component constituting the antifouling coating composition of this embodiment will be described below.

Silyl acrylic copolymer (A)

The silylacrylic copolymer (A) of this embodiment is a hydrolyzable copolymer and plays a role of a vehicle component in the antifouling coating composition. The antifouling coating composition of this embodiment also contains, for example, copper or a copper compound (C) (described later) as an antifouling agent. An antifouling coating film is formed from the antifouling coating composition, and when actually using an antifouling substrate with the antifouling coating film formed thereon (bringing the antifouling coating film into contact with fresh water or sea water), the silyl acrylic copolymer (A) is hydrolyzed. As a result, due to a dissolution of the vehicle component in the coating film, the antifouling agent similarly contained in the coating film is eluted out of the coating film, and adhesion of aquatic organisms is suppressed.

The silylacrylic copolymer (A) of this embodiment has the following component units.

- A component unit derived from triisopropylsilyl (meth) acrylate (A1)
- A component unit derived from a polymerizable monomer (A2) having a polymerizable double bond

(A component unit derived from triisopropylsilyl (meth) acrylate (A1))

As the name implies, the component unit may be one having triisopropylsilyl (meth) acrylate as a main component, it is also possible to substitute a part (such as H) of the component while keeping the main component as it is. Hereinafter, the same meaning is also applied to "derivative". As triisopropylsilyl (meth) acrylate, at least one of TIPSA (triisopropylsilyl acrylate) and TIPSMA (triisopropylsilyl methacrylate) may be used.

Of course, the present invention does not exclude the inclusion of monomers other than triisopropylsilyl (meth) acrylate (A1), and depending on the purpose, optional components other than the above component units may be contained.

(A component unit derived from a polymerizable monomer (A2) having a polymerizable double bond)

The polymerizable monomer (A2) having a polymerizable double bond in this embodiment may have any polymerizable double bond (for example, a vinyl group or a (meth) acryloyl group). The polymerizable monomer (A2) is copolymerized with triisopropylsilyl (meth) acrylate, that is, the monomer (A1) or the polymerizable monomer (A2) itself. From a viewpoint that a stable copolymer can be synthesized, the polymerizable monomer (A2) is preferably at least one of esters having a polymerizable double bond and derivatives thereof (referred to as esters), or a carboxylic acid having a polymerizable double bond and a derivative thereof (referred to as carboxylic acids. The kind or group of the substance is referred to as hereafter).

As the esters and carboxylic acids used as the polymerizable monomer (A2), (Meth) acrylic acid esters, monocarboxylic acids, dicarboxylic acids or half esters (monoesters), diesters and vinyl esters thereof excepting triisopropylsilyl (meth) acrylate (A1), can be given. Examples of the polymerizable monomer (A2) other than esters and carboxylic acids include styrenes.

Specific examples of the polymerizable monomer (A2) include, for example, (Meth) acrylic acid methyl ester (for example, (meth) acrylate esters such as MMA (methyl methacrylate)), (meth) acrylic acid ethyl ester, (meth) acrylic acid butyl ester (for example, BA (butyl acrylate), 2-ethylhexyl (meth) acrylate, lauryl (meth) acrylate, tridecyl (meth) acrylate, stearyl (meth) acrylate, allyl (meth) acrylate, (meth) acrylic acid cyclohexyl ester, (meth) acrylic acid benzyl ester, (meth) acrylic acid isobornyl ester, (meth) acrylic acid methoxy ester (for example, MEA (methoxyethyl acrylate), MEMA (methoxyethyl methacrylate) (meth) acrylic acid ethoxy ester, (meth) acrylic acid glycidyl ester, (meth) acrylic acid tetrahydrofurfuryl ester, (meth) acrylate esters such as (meth) acrylic acid hydroxyethyl ester, (meth) acrylic acid hydroxypropyl ester, and (meth) acrylic acid hydroxybutyl ester; monocarboxylic acids such as (meth) acrylic acid; itaconic acid, maleic acid and succinic acid, or half ester (monoester) or diester thereof; styrenes such as styrene and $\alpha$-methylstyrene; and vinyl esters such as vinyl acetate and vinyl propionate, may be used, and they may be used alone or in combination of two or more.

In the silylacrylic copolymer (A) in this embodiment, it is acceptable to prepare the triisopropylsilyl (meth) acrylate (A1) and the polymerizable monomer (A2) having a polymerizable double bond are copolymerized by a known polymerization method. As a polymerization method, for example, solution polymerization, suspension polymerization, emulsion polymerization or bulk polymerization using a radical polymerizable catalyst such as an organic peroxide or an azo compound such as 2,2'-azobis-2-methylbutyronitrile, may be used. In particular, when the productivity of the copolymer, the workability of production, and the resin finish viscosity are taken into consideration, it is preferable to solution-polymerize the monomers (A1) to (A2) using a commonly used organic solvent such as toluene, xylene, methyl isobutyl ketone or n-butyl acetate.

As the radical polymerization catalyst in the polymerization, well-known ones can be widely used, and for example, benzoyl peroxide, t-butyl peroxy-2-ethylhexanoate, or t-butyl peroxybenzoate, t-butyl peroxyoctoate, which are peroxides, 2,2'-azobis (2-methylbutyronitrile), 2,2'-azobis (2,4-dimethylvaleronitrile), or 2,2'-azobis-isobutyronitrile can be given.

The content weight ratio of the component unit derived from triisopropylsilyl (meth) acrylate (A1) and the component unit derived from the polymerizable monomer (A2) having a polymerizable double bond is, preferably 30/70 to 90/10 from the viewpoints of e.g. coating film hydrolyzability (consumable property), static antifouling property and coating film appearance, and in a preferable aspect thereof, it is desirably 40/60 to 70/30.

From the viewpoints of e.g. coating workability, long-term storage stability, coating film water resistance (mechanical properties), coating film hydrolyzability (consumable property), static antifouling property, and coating film appearance, it is preferable that the silyl acrylic copolymer (A) is contained in an amount of usually 10 to 50 wt%, preferably 15 to 30 wt% as the total amount in the antifouling coating composition. It is contained in an amount of 10 to 30 pbw in 100 pbw in total of the solid content (heating condition at 125°C / 1 hour drying) contained in the antifouling coating composition of this embodiment.

Further, the average molecular weight of the silyl acrylic copolymer (A) is preferably 5,000-100,000, and more preferably 10,000-60,000. The antifouling coating composition containing the silylacrylic copolymer (A) having the average molecular weight within such a range, has excellent hydrolyzability of a coating film when forming the coating film, capable of further improving the static antifouling property, and capable of exhibiting excellent long-term mechanical properties (such as an adhesiveness of the antifouling coating film of this embodiment and appearance properties such as cracks in the case of, for example, long-term immersion in water,. to/on e.g. the substrate and the undercoat film.).

Rosin and rosin compound (B) which is a derivative of rosin.

The rosin and the rosin compound (B) which is a derivative of rosin in this embodiment play a role of adjusting a rate of hydrolysis of the silyl acrylic copolymer (A) described above. The degree of hydrolysis rate of the silyl acrylic copolymer (A) is influenced mainly by the amount of carboxyl groups not modified (unesterified) in the rosin compound (B). Therefore, the properties of the antifouling coating composition and its related substances are determined mainly by the silyl acrylic copolymer (A) which is a vehicle component and the rosin compound (B) which controls the rate of hydrolysis of the silyl acrylic copolymer (A).

The rosin in this embodiment is, as one example, a residue remaining after distilling pine resin which is a sap of a plant of Pineaceae, and it is a natural resin containing rosin acid (such as abietic acid, palustric acid and isopimaric acid) as a main component. The rosin in this embodiment is a naturally derived resin, and the property is different depending on e.g. a harvested place where it is collected and seasons, and in addition, the inventors of the present invention have confirmed that the viscosity is greatly different when the antifouling coating composition is produced.

When the inventors of the present invention examine the rosin in each place of origin, the difference in each rosin is the ratio of e.g. abietic acid, parastophosphoric acid and isopimaric acid, the mixing ratio of dimers and trimers thereof, and also property values such as acid value and softening point.

It is found by the inventors of the present invention that a difference in the property values of these rosins affects the physical properties of the coating film of the specific silylacrylic copolymer as a raw material, the film erosion resistance, and the antifouling property. After further studies by the inventors of the present invention, it is found that particularly when the component unit derived from triisopropylsilyl (meth) acrylate (A1) is contained, the difference in acid value in rosin greatly affects long-term coating film physical properties such as viscosity when formed into a coating, storage stability, and occurrence of coating cracking. In addition, it is also found that the difference in softening point of rosin greatly affects a difference in initial drying property and a difference in damage resistance.

The above content becomes more remarkable in a case of the antifouling coating composition containing a copolymer of TIPSA (triisopropylsilyl acrylate) and TIPSMA (triisopropylsilyl methacrylate) which is an example of component (A1). That is, in the case of the antifouling coating composition, coating viscosity, storage stability, coating film physical properties, film erosion resistance, and static antifouling property of the antifouling coating film and drying property are changed, depending on the difference in the acid value and the softening point of rosin.

As a result of intensive studies by the inventors of the present invention based on the abovementioned each knowledge, the antifouling coating composition of this embodiment is found, which is capable of exhibiting well-balanced effects of long-term storage stability and further when the coating film is formed, effects of long-term antifouling properties (particularly, static antifouling properties) and long-term water resistance (long-term mechanical properties: outer appearance properties such as adhesion property, abrasion resistance, crack resistance and breakage, of the coating film when immersed in water, particularly when immersed in seawater for a long period.

In this embodiment, the rosin may be a rosin derivative besides rosin itself. For example, as rosin itself (so-called rosins, and rosin which is not a derivative is simply referred to as "rosin" hereafter), gum rosin, wood rosin and tall oil rosin are used. Meanwhile, hydrogenated rosin and disproportionated rosin can be given as examples of the rosin derivatives.

Of course, both rosins and rosin derivatives may be used, and in this embodiment, at least one of the rosins and the rosin derivative is referred to as a rosin compound (B).

Here, the rosin compound (B) of this embodiment is a metal-free type. That is, in the rosin compound (B) of this embodiment, as a matter of course, rosin itself is not subjected to salification also in the rosin derivative using a metal element. (For the definition of metal elements, it will be described later in the item of copper or copper compound (C)). Thus, a large number of carboxyl groups are free in the rosin compound (B). Thus, an advantageous effect is exerted as compared with a use of the rosin metal salt that has been taken into consideration as the metal salt in advance as described in JP-A-2010-150355. Detailed explanation will be given hereafter.

By employing the above rosin compound (B), it is possible to satisfy all of the properties as indicated by the items of the embodiments described later. The reason is assumed as follows. The balance of each property (for example, water resistance) of the silyl acrylic copolymer (A) (particularly, the component unit derived from triisopropylsilyl (meth) acrylate (A1)) itself and each property (for example, water resistance) of the rosin compound (B), also affects the other properties.

As an example, even if the water resistance of the metal salt of the rosin compound (B) is considered to be extremely good, when the water resistance of the silyl acrylic copolymer (A) is not so good, the water resistance of the antifouling coating composition (antifouling coating film) is not good as a result. Conversely, when the water resistance of the silyl acrylic copolymer (A) is extremely good, the antifouling property is lowered. In addition, water resistance of other components (e.g. organic antifouling agent (D), coloring pigment (E) and extender pigment (F)) to be described later must also be taken into consideration. Then, as described in JP-A-2010-150355, if rosin metal salt is prepared beforehand, there is a possibility that each property may be unbalanced.

In contrast, in this embodiment, unmodified rosin compound (B) is employed. Therefore, there is an extreme matching between each property of the silyl acrylic copolymer (A) (particularly, the component unit derived from triisopropylsilyl (meth) acrylate (A1)) and each property of the rosin compound (B). More preferably, each property of the other components can also be matched as indicated in the items of examples described later.

That is, according to this embodiment, as described in JP-A-2010-150355, it is possible to satisfy all the abovementioned properties, and it is possible to suppress increase of viscosity during production, without using the rosin metal salt.

Further, as rosin metal salt which has been converted into the metal salt in advance, rosin has already been completely converted into a metal salt. Therefore, the balance of each property can no longer be adjusted by using the rosin metal salt. On the other hand, by using a so-called unmodified rosin compound (B), it is possible to adjust each property by using other components while suppressing increase of viscosity during production. In other words, the balance of each property can be adjusted later, and therefore the rosin compound (B) can have high versatility.

Further, it is not necessary to use the rosin metal salt that has been previously converted into metal salt, and therefore it is not necessary to purposely provide a pretreatment process to convert rosin into metal salt by adding temperature, thereby having an economic merit.

When the abovementioned rosin derivative is employed in addition to making the rosin derivative a metal-free type, it is preferable to set the average molecular weight to ≤ 1000. Under this condition, the rosin derivative of this embodiment has not yet been subjected to salification using the metal element or modification using another compound (for example, another resin). Even if it is subjected to salification or modification, many carboxyl groups should be present. The same can be said for the modification of the rosin derivative using resin, and under the condition that the average molecular weight is set to ≤ 1000, it is defined that modification using a high molecular weight resin (for example, silyl acrylic copolymer (A)) is not performed. Thus, hydrolysis of the silylacrylic copolymer (A) to be used in combination is accelerated, it becomes possible to promptly elute the antifouling agent (for example, copper or a copper compound (C) described later) from the coating film, and as a result, the antifouling effect is also improved. Hereinafter, the above situation will be collectively referred to as "unmodified".

On the other hand, the average molecular weight of the rosin itself is preferably ≤ 400, more preferably ≤ 360. The preferable reason is the same as the reason for the abovementioned rosin derivative.

Incidentally, regarding a measurement of the weight average molecular weight of the rosin derivative, GPC (gel permeation chromatography) indicated by the item of the below-mentioned examples may be used.

However, according to the studies by the inventors of the present invention, it is more preferable to use the unmodified rosin itself, namely rosins, as the rosin compound (B). It becomes possible to more effectively promote the hydrolysis of the silylacrylic copolymer (A) after the antifouling coating film is formed and actually used, and as a result, the antifouling agent is eluted more effectively.

(Acid value of the rosin compound (B))

A range of the acid value of a general rosin which is a natural resin is 160-190 (mg KOH/g), it is found by the inventors of the present invention that when the acid value is too high, the viscosity of the coating is increased, and the storage stability is also poor, and when the coating film is formed, the coating film becomes brittle and coating film defects such as cracks are likely to occur over time.

The rosin compound (B) of this embodiment has a role of, as described above, making the antifouling agent rapidly eluted from the antifouling coating film so as to contribute to antifouling, and as a result, improving the static antifouling property. In addition, according to this embodiment, the rosin compound (B) is used as a material for adjusting the rate of hydrolysis of the silylacrylic copolymer (A) after actually using the rosin compound (B) with the antifouling coating film formed thereon.

According to the studies by the inventors of the present invention, as shown in the items of the examples described later, the abovementioned each property can be realized, by setting the acid value of the rosin compound (B) to ≤ 180 (mg KOH/g) (more preferably by setting the softening point to ≥ 75°C in the case of the rosin derivative) for the silylacrylic copolymer (A) containing the component unit derived from triisopropylsilyl (meth) acrylate (A1). The reason for this is assumed that properties (For example, hardness) are well-balanced between the rosin compound (B) and the silyl acrylic copolymer (A). The reason is also assumed that the rate of hydrolysis of the silylacrylic copolymer (A) after actually using it with the antifouling coating film formed thereon is also moderate so that the antifouling agent is effectively eluted. As a result thereof, it is considered that each of the abovementioned properties can be realized finally.

The range of the acid value of the rosin compound (B) in this embodiment is ≤ 180 (mg KOH/g), and the more preferable range is ≤ 175 (mg KOH/g).

(Method for measuring the acid value of the rosin compound (B))

As an example, the acid value of the rosin compound (B) is measured by the following method.

<1> 0.5 mg of rosin is weighed in a 100 ml beaker and ethanol: toluene = 1: 1 solution is added to be dissolved therein.
<2> Potentiometric titration is performed using N/10 (0.1 mol/L) -KOH-ethanol solution.
<3> Titration of ethanol: toluene = 1: 1 solution is also performed as a blank measurement.
Then, the acid value is calculated by the following calculation formula.

$$\text{Acid value} = \{(Vx - V0) * f * 5.61\} \div 0.5$$

Vx: Titration value of sample (ml)
V 0: titration value of blank (ml)
F: Factor of N/10-KOH-ethanol f is obtained as follows.

<4> N / 10-KOH ethanol solution is prepared and dropping is performed.

3.5 g of KOH is dissolved in a small amount of water as much as possible, 500 ml of ethanol is added, and the mixture is allowed to stand in a sealed condition for 24 hours, and a supernatant is used (JIS K 5407 3.1.1). The dropping is performed using N/10-hydrochloric acid 5 ml + water 50 ml. As a result, f becomes as follows.
F: (Factor of 5 ml hydrochloric acid) / (KOH required for titration) - ml of ethanol
Then, the acid value is measured from the above acid value formula.
Alternatively, the rosin component may be appropriately extracted from the coating using a solvent, and the acid value may be measured.

(The softening point of the rosin compound (B))

The softening point of the rosin compound (B) also has a large influence on the physical properties of the coating film made from a specific silyl acrylic copolymer as a raw material. In a case of the rosin compound (B) which is a natural resin, there are softening points in a range of 40-140°C. When the softening point is low, the drying property is particularly affected. The lower the softening point is, the slower the initial drying is, and damage is more likely to occur. Therefore, the softening point or at least the rosin itself of the rosin compound (B) is preferably ≥ 75°C. The softening point of the rosin derivative is also preferably ≥ 75°C. The reason therefor is the same as the reason for the above rosin.
Particularly, by using the rosin compound (B) having the acid value and the softening point in an optimum range, it is possible to obtain further excellent physical properties such as the viscosity of the coating material, storage stability, and long-term antifouling property of the antifouling coating material made from a specific silyl acrylic copolymer as a raw materi al.

(Method for measuring the softening point of the rosin compound (B))

The softening point of the rosin compound (B) can be measured in accordance with JIS K 5902. Briefly, this is a technique of placing steel balls on a solidified melted rosin compound (B) flowed into a ring, and raising a temperature, so that the temperature at which the rosin compound (B) in the ring is melted and flows out of the ring and comes into contact with the bottom plate is taken as the softening point.
In the antifouling coating composition of this embodiment, the content weight ratio ($W_A$ / $W_B$) of the content weight (WA) of the silyl acrylic copolymer (A) with respect to the content weight (WB) of the rosin compound (B) is preferably 99.9/0.1 to 30/70, more preferably 95/5 to 35/65, still more preferably 90/10 to 40/60. When the content weight ratio is in such a range, there is an effect of enhancing the scourability (coating film consumption) of the antifouling coating film which is made from the antifouling coating composition, and it becomes easier to improve the antifouling property (particularly, static antifouling property).
Incidentally, the rosin compound (B) includes not only natural resins but also synthetic resins. However, according to studies by the inventors of the present invention, natural resin is very preferable, in consideration of the following points: 1) the difference in properties between the silyl acrylic copolymer (A) and the rosin compound (B) can be further reduced, 2) the rate of hydrolysis of the silyl acrylic copolymer (A) when the antifouling coating film is actually used can be further moderated, 3) the antifouling agent is eluted more quickly from the antifouling coating film, thereby contributing to antifouling.

Copper or copper compound (C)

The antifouling coating composition of this embodiment may further contain copper or a copper compound (C) in order to further improve the antifouling property of the antifouling coating film which is made from the antifouling coating composition. The copper compound may be either an organic compound or an inorganic compound, and for example, and powdered copper (copper powder), cuprous oxide, copper thiocyanate, cupronickel and copper pyrithione can be given.

Further, in the antifouling coating composition of this embodiment, From the viewpoint of long-term antifouling property, the content of copper or copper compound (C) is preferably 10-800 pbw, more preferably 100-750 pbw, based on 100 pbw of the silyl acrylic copolymer (A), and it is usually 0.1-70 wt%, preferably 0.1-60 wt% based on 100 wt% of the antifouling coating composition (including solvent).

The copper element of copper or copper compound (C) in this item is one of the "metal elements" referred to in this specification. In this specification, "metal element" is a generic term including not only atomic state (zero valence) but also metal ionized state. As this metal element, it refers to one which is solid at an ordinary temperature as a simple substance, easy to be plastically deformed, and can be subjected to spreading processing. For example, a copper element in the copper or copper compound (C) described below, and a zinc element in zinc oxide which is an example of the extender pigment (F) can be given.

Organic antifouling agent (D)

To further improve the antifouling property of the antifouling coating film which is made from the antifouling coating composition, and particularly in order to improve the antifouling effect on vegetable marine organisms, the antifouling coating composition of this embodiment may further contain an organic antifouling agent (D). The organic antifouling agent (D) is not particularly limited as long as it is an organic compound which imparts antifouling property to the antifouling coating film, except for the organic copper compound.

As the organic antifouling agent (D), for example, Metal pyrithione such as zinc pithion, 4,5-dichloro-2-n-octyl-4-isothiazolin-3-one, 4-Bromo-2- (4-chlorophenyl) -5- (trifluoromethyl) -1H-pyrrole-3-carbonitrile, pyridine triphenylborane, N, N-dimethyldichlorophenyl urea, 2,4,6-trichlorophenyl maleimide, 2,4,5,6-tetrachloroisophthalonitrile, bisdimethyldithiocarbamoyl zinc ethylene bisdithiocarbamate, chloromethyl n-octyl disulfide, N, N'-dimethyl-N'-phenyl (N-fluorodichloromethylthio) sulfamide, tetraalkylthiuram disulfide, zinc dimethyldithiocarbamate, zinc ethylenebisdithiocarbamate, 2,3 dichloro N-(2 ', 6'-diethylphenyl) maleimide and 2,3 Dichloro N-(2'-ethyl-6'-methylphenyl) maleimide can be given.

In the antifouling coating composition of this embodiment, the content of the organic antifouling agent (D) is preferably 0.1-500 pbw, more preferably 0.5-300 pbw based on 100 pbw of the silyl acrylic copolymer (A), and it is usually 0.1-30 wt%, preferably 0.1-20 wt% based on 100 wt% of the antifouling coating composition (including solvent), from a viewpoint of long-term antifouling property and maintenance of coating film water resistance (maintenance of mechanical properties).

The coloring pigment (E)

The antifouling coating composition of this embodiment contains a coloring pigment (E) to adjust a color tone of the antifouling coating film which is made from the antifouling coating composition or to give an arbitrary color tone.

Various known organic or inorganic coloring pigments can be given as the coloring pigment (E). Carbon black, naphthol red and phthalocyanine blue can be given as examples of the organic coloring pigments. Further, red iron oxide, baryta powder, titanium white and yellow iron oxide can be given as examples of the inorganic coloring pigments.

Further, in the antifouling coating composition of this embodiment, a coloring agent different from the abovementioned coloring pigment (E), which is a coloring agent such as a dye may be contained together with the coloring pigment (E) described above or in place of the coloring pigment (E).

In the antifouling coating composition of this embodiment, the content of the coloring pigment (E) is preferably 0.01-100 pbw, more preferably 0.01-10 pbw, based on 100 pbw of the silyl acrylic copolymer (A), from the viewpoints of coloring property, masking property, exposure discoloration property, antifouling property, and water resistance of the coating film (mechanical properties).

Further, the content of the coloring pigment (E) is usually 0.1-30 wt%, preferably 0.1-20 wt% based on 100 wt% of the antifouling coating composition (including the solvent).

Extender pigment (F)

As the extender pigment (F), for example, talc, silica, mica, clay, potash feldspar, zinc oxide, calcium carbonate, kaolin, alumina white, white carbon, aluminum hydroxide, magnesium carbonate, barium carbonate and barium sulfate can be given. Among them, talc, silica, mica, clay, calcium carbonate, kaolin, barium sulfate, potash feldspar and zinc oxide are preferable. Calcium carbonate and white carbon are also used as a matting agent and as an anti-settling agent (K) described later.

In the antifouling coating composition of this embodiment, the content of extender pigment (F) is preferably 0.1-500 pbw, more preferably 50-300 pbw based on 100 pbw of the silyl acrylic copolymer (A), and is usually 0.1-50 wt%, preferably 0.1-40 wt% based on 100 wt% of the antifouling coating composition (including the solvent), from the viewpoints of water resistance (coating) of coating film, antifouling property, and coating film hydrolyzability (consumable property).

The dehydrating agent (G)

As the dehydrating agent (G), e.g. conventionally known gypsum or ethyl silicate can be given. The content of the dehydrating agent (G) is preferably 0.01-100 pbw, more preferably 0.1-50 pbw based on 100 pbw of the silyl acrylic copolymer (A), and is usually 0.1-10 wt%, preferably 0.5-5 wt% based on 100 wt% of the antifouling coating composition (including solvent), from the viewpoint of preventing viscosity increase during storage.

Plasticizer (H)

The antifouling coating composition of this embodiment preferably contains a plasticizer (H) to improve crack resistance of the obtained antifouling coating film. As examples of the plasticizer (H), chlorinated paraffin (chlorinated paraffin), petroleum resins, ketone resin, TCP (tricresyl phosphate) and polyvinyl ethyl ether, dialkyl phthalate can be given. Among them, the plasticizer (H) is preferably chlorinated paraffin (chlorinated paraffin), a petroleum resin or a ketone resin, from the viewpoints of water resistance of coating film (mechanical properties) and coating film hydrolyzability (consumability). One type of plasticizer (H) may be used alone, or two or more types may be used in combination.

The chlorinated paraffin may have either a linear or branched molecular structure, or it may be in a liquid state or in a solid state (for example, in powder form) under a room temperature (eg 23°C) condition.

Further, chlorinated paraffin has an average carbon number of usually 8-30, preferably 10-26, in one molecule. Such an antifouling coating composition containing chlorinated paraffin can form an antifouling coating film with less cracks (breakage) and peeling. When the average carbon number is < 8, the effect of suppressing the occurrence of cracks in the antifouling coating film is sometimes insufficient, on the other hand, when the average carbon number exceeds 30, the hydrolyzability (renewability, abrasiveness) of the antifouling coating film becomes small, and as a result, the antifouling property is sometimes inferior.

Further, in paraffin chloride, the viscosity (unit poise, measurement temperature 25°C) is usually $\geq 1$, preferably $\geq 1.2$, and the specific gravity (25°C) is usually 1.05-1.80, preferably 1.10-1.70.

The chlorination rate (chlorine content) of chlorinated paraffin is usually 35-70 wt%, preferably 35-65 wt%, based on 100 wt% of chlorinated paraffin. An antifouling coating composition containing chlorinated paraffin having such a chlorination rate can form a coating film with less cracks (cracks) and peeling, etc. As a specific example of such a chlorinated paraffin, "Toyoparax 150" and "Toyoparax A-70" (both manufactured by Tosoh Corporation) can be mentioned.

Further, as the petroleum resins, C5 series, C9 series, styrene series, dichloropentadiene series, and hydrogenated products thereof can be mentioned. As a specific example of petroleum resins, "Quinton 1500" and "Quinton 1700" (both manufactured by Nippon Zeon Co., Ltd.) can be mentioned.

In the antifouling coating composition of this embodiment, from the viewpoints of coating film hydrolysis (abrasion resistance), antifouling property and coating film water resistance (mechanical properties), the content of the plasticizer (H) is preferably 0.1-300 pbw, more preferably 0.1-200 pbw, still more preferably 0.1-150 pbw, based on 100 pbw of the silyl acrylic copolymer (A), and is usually 0.1-30 wt%, preferably 0.1-20 wt% based on 100 wt% of the antifouling coating composition (including solvent).

Pigment dispersant (I)

Known organic or inorganic pigment dispersants can be mentioned as the pigment dispersant (I). As the organic pigment dispersant, aliphatic amines or organic acids (for example, "Duomin TDO" (manufactured by LION), "Disperbyk 101" (manufactured by BYK Corp.)) can be mentioned.

In the antifouling coating composition of this embodiment, from the viewpoints of a viscosity reduction effect and a color separation prevention effect in the coating material, the content of the pigment dispersant (I) is preferably 0.01-100 pbw, more preferably 0.01-50 pbw based on 100 pbw of the silyl acrylic copolymer (A), and is usually 0.1-10 wt%, preferably 0.1-5 wt% based on 100 wt% of the antifouling coating composition (including solvent).

Anti-sagging agent (1)

The antifouling coating composition of this embodiment is preferable from the viewpoint that the occurrence of sagging by the coating composition can be reduced when the substrate is coated with the antifouling coating composition, an anti-sagging agent (J) (also referred to as a flow stopper) may be contained.

As the anti-sagging agent (J), amide wax, hydrogenated castor oil wax, polyamide wax, mixtures thereof, synthetic fine powder silica, etc., can be given. Among them, the anti-sagging agent (J) is preferably amide wax or synthetic fine powder silica, from the viewpoints of storage stability and coatability of homogeneous / heterogeneous coating materials.

Commercially available products of anti-sagging agent (J) include "Disparlon A 630-20 XC" (manufactured by Kusumoto Kasei Co., Ltd.) and "ASAT-250 F" (manufactured by Itoh Essential Oil Co., Ltd.).

In the antifouling coating composition of the present embodiment, the content of the anti-sagging agent (J) is preferably 0.1-100 pbw, more preferably 0.1-50 pbw based on 100 pbw of the silyl acrylic copolymer (A), and is usually 0.1-20 wt%, preferably 0.1-10 wt% based on 100 wt% of the antifouling coating composition (including solvent), from the viewpoints of storage stability and coatability of homogeneous / heterogeneous coating materials.

Anti-settling agent (K)

From the viewpoint that it is possible to prevent the occurrence of precipitates in the coating composition during storage and to improve the stirring property, the antifouling coating composition of this embodiment may contain an anti-settling agent (K).

As the anti-settling agent (K), organic clay type Al, amine salts of Ca or Zn, polyethylene type wax and oxidized polyethylene type wax can be given as examples. Among them, the anti-settling agent (K) is preferably an oxidized polyethylene wax. As a commercially available product of oxidized polyethylene wax, "Disparlon 4200-20X" (manufactured by Kusumoto Chemicals Ltd.) can be given.

In the antifouling coating composition of the present embodiment, from the viewpoints of storage stability and coatability of homogeneous / heterogeneous coating materials, the content of the anti-settling agent (K) is preferably 0.1-100 pbw, more preferably 0.1-50 pbw based on 100 pbw of the silyl acrylic copolymer (A). Further, the content of the anti-settling agent (K) is usually 0.1-20 wt%, preferably 0.1-10 wt% based on 100 wt% of the antifouling coating composition (including the solvent).

Solvent (L)

To improve the dispersibility of e.g. the silyl acrylic copolymer (A) and to adjust the viscosity of the composition, the antifouling coating composition of this embodiment may contain a solvent (L) such as water or an organic solvent if necessary. As a solvent (L), the antifouling coating composition of this embodiment may contain a solvent used for preparing the silyl acrylic copolymer (A) or may contain a solvent added separately when mixing the silyl acrylic copolymer (A) and other components as necessary. In consideration of an environmental burden, the VOC value of the organic solvent is preferably ≤ 400 g/L.

As examples of the organic solvent, aromatic organic solvents such as xylene, toluene and ethylbenzene; ketones such as methyl ethyl ketone, methyl isobutyl ketone and cyclohexanone; monohydric aliphatic alcohols such as ethanol, isopropyl alcohol, n-butanol and isobutanol; and ester solvents such as ethyl acetate and butyl acetate., can be given.

The content of the solvent (L) in the antifouling coating composition of this embodiment is usually 20-80 wt%, preferably 30-70 wt% in many cases, when the antifouling coating composition is 100 wt%.

<2. Method for producing the antifouling coating composition>

The antifouling coating composition of this embodiment is produced through a mixing step of mixing the above silyl acrylic copolymer (A) and the above rosin compound (B).

As a specific method, the antifouling coating composition of this embodiment may be produced by appropriately using a known method. For example, the silyl acrylic copolymer (A) and, optionally, the components (B) to (F) described above are added to a stirring vessel at a time or in an arbitrary order, and the components may be mixed by known stirring and mixing means and dispersed or dissolved in the solvent. As examples of the stirring and mixing means, a high-speed disperser, a sand grind mill, a basket mill, a ball mill, a triple roll, a Ross mixer, a planetary mixer and a universal Shinagawa stirrer can be given.

<3. Antifouling coating composition>

The antifouling coating composition of this embodiment is formed by "blending" the silyl acrylic copolymer (A) and the rosin compound (B).

"Blending" as used herein means mixing two or more kinds as its name suggests, but it does not mean "synthesis". More specifically, "blending" in the present specification does not chemically synthesize the silyl acrylic copolymer (A) and the rosin compound (B) but means a state in which the two are simply mixed. Therefore, as described in JP-A-2005-015531, the meaning is completely different between a blending in which a resin varnish is prepared by dissolving e.g. triisopropylsilyl acrylate (TIPSI; hydrolyzable type resin) in e.g. xylene, a hydrogenated rosin or the like is added to the resin varnish to synthesize an acrylic resin varnish which is one type of hydrolyzable type resin, and a blending not accompanied by synthesis between the silyl acrylic copolymer (A) and the rosin compound (B) of this specification.

As shown in the items of the embodiments described later, the antifouling coating composition satisfies all the properties listed in the problem of the present invention and to suppress increase of viscosity during production. Regarding the properties and technical significance of the antifouling coating composition, they are the same as those described in

<1. Each component constituting the antifouling coating compositions

<4. Antifouling coating film and antifouling substrate>

The antifouling coating film of this embodiment is obtained by curing the antifouling coating composition of this embodiment by using a drying means such as natural drying or a heater.

Further, the antifouling substrate of this embodiment is made by forming the antifouling coating film on the substrate, by applying the antifouling coating composition of this embodiment or impregnating it to a substrate (object, coated object) using a coating means such as an air spray, an airless spray, a brush or a roller, and drying and curing the coating composition applied or impregnated to the substrate by, for example, natural drying (at a temperature of about room temperature) or a drying means such as a heater.

Here, the substrate is not particularly limited, but is preferably a substrate in contact with seawater or fresh water, and specifically, water supply and discharge ports of various power plants (thermal power, nuclear power), underwater structures such as sludge diffusion preventing membranes used in various ocean / river civil engineering works such as bay roads, submarine tunnels, port facilities or canals / waterways, ships such as FRP ships (Particularly a portion from a draft section to a bottom of the ship), and fishery materials (rope, fishing gear such as fishnet, float or buoy).

The material of these substrates is, for example, steel, aluminum or wood, particularly in ships, and natural and synthetic fibers in e.g. fishnets, and those made of synthetic resin can be used for e.g. floaters and buoys, there is no particular limitation on the material as long as it is a substrate that is required to have antifouling properties in water.

On the surface of these substrates, particularly in a case of the substrate of a ship's bottom, usually, the antifouling coating composition (antifouling coating material) of this embodiment is applied over a surface of the primer-treated substrate after under-coating a surface of a steel substrate with a primer such as a rustproof coating material, the antifouling coating composition which is applied or impregnated (particularly, when the substrate is, for example, a fishnet) is cured to form an antifouling coating film. In this case, an excellent property of preventing adhesion of aquatic organisms such as Sea lettuce, Barnacles, Green laver, Serpura, Oyster and Bugula neritina over a long period of time (antifouling property, particularly static antifouling property) can be obtained, and particularly when an antifouling component (for example, copper or a copper compound (C), an organic antifouling agent (D)) is contained in the antifouling coating film, the antifouling component can be sustainedly released over a long period of time.

Also, when the substrate is, for example, a ship (particularly the ship's bottom) or an underwater structure (usually, the surface of the substrate is subjected to a primer treatment, or having a layer made of any one of an epoxy resin coating material, a vinyl resin coating material, an acrylic resin coating material, and an urethane resin coating material), the antifouling coating composition is applied on the surface of the substrate a plurality of times (thick coating: dry film thickness of 100-600 μm), thus making it possible to make a resulting antifouling substrate exert excellent antifouling properties, appropriate flexibility and excellent crack resistance in a well-balanced manner.

In the production of the antifouling substrate, when the substrate is, for example, a steel plate or a fishnet with a deteriorated antifouling coating film, the antifouling coating composition of this embodiment may be directly applied or impregnated (in the case of e.g. fishnets) on the surface of the substrate, and when the substrate is a steel plate cloth, an undercoat material such as a rustproof agent or a primer is previously applied on the surface of the substrate to form an undercoat layer, and thereafter the coating composition of this embodiment may be applied on the surface of the underlying layer. Further, the antifouling coating film of this embodiment may be further formed for repair on the surface of the substrate on which the antifouling coating film of this embodiment or a conventional antifouling coating film is formed.

The thickness of the antifouling coating film is not particularly limited, but in a case of the substrate of a ship or an underwater structure, for example, it is 30-150 μm/one coating.

As described above, the underwater structure having the antifouling coating film of this embodiment can maintain a function of the underwater structure for a long period of time, because adhesion of aquatic organisms can be prevented over a long period of time. Further, the fishnet having the antifouling coating film of this embodiment is less likely to cause environmental pollution and can prevent clogging of the mesh because adhesion of aquatic organisms can be prevented.

<5. Effect of this embodiment>

According to this embodiment, mainly the following effect can be exerted.

The antifouling coating composition of this embodiment is capable of exhibiting well-balanced effects of long-term storage stability (particularly, with small increase of viscosity during long-term storage) and further when the coating film is formed, effects of long-term antifouling properties (particularly, static antifouling properties) and long-term water resistance (long-term mechanical properties: outer appearance properties such as adhesion property, abrasion resistance, crack resistance and breakage, of the coating film when immersed in water, particularly when immersed in seawater for a long period).

Further, the antifouling coating film and the antifouling substrate of this embodiment exhibit excellent long-term antifouling property and long-term water resistance (long-term mechanical properties) in a well-balanced manner. Further, according to the method for producing the antifouling substrate of this embodiment, the antifouling substrate exhibiting excellent long-term antifouling property and long-term water resistance can be produced.

In addition, it is possible to provide the rosin compound (B) for obtaining the antifouling coating material using the silyl acrylic copolymer (A) which is excellent in long-term storage stability (particularly, with small increase of viscosity during long-term storage), and when the coating film is formed, which is excellent in long-term antifouling property (particularly, static antifouling property) and long-term water resistance property (long-term mechanical properties: adhesion of coating film in water, particularly when it is immersed for a long time in sea water, appearance properties such as abrasion resistance, crack resistance or cracking) in a well-balanced manner.

Example

The present invention will be described in further detail next, based on examples. However, the present invention is not limited to these examples. In the "Examples", "%" means "wt%" unless otherwise specified.

As an order of explanation, an example of producing a material corresponding to the silyl acrylic copolymer (A) in this embodiment will be described as [Production Example]. Thereafter, explanation will be given for an example in which various additives (such as rosin) are added to each polymer produced in each production example.

[Production Example A-1]

53 pbw of xylene was charged into a reaction vessel equipped with a stirrer, a reflux condenser, a thermometer, a nitrogen introduction pipe and a dropping funnel, and under a nitrogen atmosphere, xylene was heated under normal pressure until the temperature of xylene in the reaction vessel reached 85°C while stirring the xylene with a stirrer. While maintaining the temperature of xylene in the reaction vessel at 85°C, a monomer mixture consisting of 45 pbw of TIPSMA (triisopropylsilyl methacrylate), 35 pbw of MEMA (methoxyethyl methacrylate), 15 pbw of MMA (methyl methacrylate), 5 pbw of BA (butyl acrylate), and 1 pbw of 2,2'-azobis (2-methylbutyronitrile) was added into the reaction vessel over 2 hours by using the dropping funnel.

Subsequently, 0.5 pbw of t-butyl peroxyoctoate was further added into the reaction vessel, and under normal pressure, stirring was continued with a stirrer for 2 hours while maintaining a liquid temperature in the reaction vessel at 85°C. Then, after raising the liquid temperature inside of the reaction vessel from 85°C to 110°C and heating was carried out for 1 hour, and thereafter 14 pbw of xylene was added into the reaction vessel, then the liquid temperature in the reaction vessel was lowered, and when the liquid temperature reached 40°C, stirring was stopped. Thus, Solution (A-1) containing silyl acrylic copolymer (A) having a component unit derived from triisopropylsilyl (meth) acrylate (A1) and a component unit derived from a polymerizable monomer (A2) having a polymerizable double bond, was prepared.

Then, a residual heating content (wt%) of the resulting silylacrylic copolymer (A) was calculated, and a weight average molecular weight Mw of the polymer contained in the solution was measured, in accordance with the test conditions described in "Properties of (co) polymer solution and (co) polymer" described later" (Results are shown in Table 1 below)

[Production Examples A-2 to A-5]

A monomer mixture having a composition shown in Table 1 was used in place of the monomer mixture used in Production Example A-1, and in the same manner as in Production Example A-1 except that the kind and amount of the solvent and the polymerization initiator were appropriately adjusted, a silyl (meth) acrylate (co) polymer solution containing a silyl (meth) acrylate copolymer was prepared, and a heating residue was calculated, so that an average molecular weight of the (co) polymer was measured. Further, MEA refers to methoxyethyl acrylate, and TIPSA refers to triisopropylsilyl acrylate. Further, solutions prepared in each of Production Examples A-2 to A-5 are referred to as solution (A-2) to solution (A-5), and this also applies to other Production Examples.

The contents relating to the above respective Production Examples are shown in the following Table 1.

[Table 1]

| | Production example A-1 | Production example A-2 | Production example A-3 | Production example A-4 | Production example A-5 |
|---|---|---|---|---|---|
| TIPSMA | 45 | 50 | 60 | 60 | |
| TIPSA | | | | | 50 |
| MEMA | 35 | 27 | 25 | | |
| MEA | | | | 25 | |
| MMA | 15 | 18 | 10 | 15 | 50 |
| BA | 5 | 5 | 5 | | |
| Heating residue (weight %) | 59.8 | 59.8 | 59.9 | 60.3 | 54.6 |
| Average molecular weight Mw | 50,516 | 38,104 | 39,880 | 39,637 | 39,446 |
| Viscosity (mPa·s) | 4,470 | 3,249 | 3,580 | 1,842 | 2,189 |

[Production Examples A-6 to A-7]

Unlike this embodiment, the components produced in the respective Production Examples of this item do not contain component units derived from triisopropylsilyl (meth) acrylate (A1). Therefore, Each Production Example of this item corresponds to a comparative example.

Each Production Example will be described below, but the items unless otherwise specified are the same as the Production Example A-1.

[Production of hydrolyzable polymer (metal ester group-containing copolymer) solution (A-6)]

In the production of the hydrolyzable polymer (A-6), first, a hydrolyzable group-containing monomer (a1-1) was prepared as follows.

<Preparation example 1: preparation of hydrolyzable group-containing monomer (metal ester group-containing monomer) (a1-1)>

85.4 parts by mass (pbm) of propylene glycol monomethyl ether and 40.7 pbm of zinc oxide were charged into a reaction vessel equipped with a stirrer, a condenser, a thermometer, a dropping device, a nitrogen introduction pipe, and a heating and cooling jacket, and the temperature was raised to 75°C while stirring. Subsequently, a mixture consisting of 43.1 pbm of methacrylic acid, 36.1 pbm of acrylic acid, and 5.0 pbm of water was dripped at a constant rate from the dropping device over 3 hours. After completion of a dropwise addition, the mixture was further stirred for 2 hours. Then, after further stirring for 2 hours, 36.0 pbm of propylene glycol monomethyl ether was added to obtain a reaction solution containing the hydrolyzable group-containing monomer (a1-1).

<Production Example A-6>

15.0 pbm of propylene glycol monomethyl ether and 57.0 pbm of xylene were charged into a reaction vessel equipped with a stirrer, a condenser, a thermometer, a dropping device, a nitrogen introduction pipe, and a heating and cooling jacket, and the temperature was raised to 100 ± 5 °C while stirring. While maintaining the same temperature, from the dropping device, a monomer mixture consisting of 52.0 pbm of a reaction solution containing the hydrolyzable group-containing monomer (a1-1) obtained in Preparation Example 1 in the reaction vessel, 1.0 pbm of methyl methacrylate, 70.2 pbm of ethyl acrylate, 5.4 pbm of 2-methoxyethyl acrylate, and 2.5 pbm of polymerization initiator 2,2'-azobisisobutyronitrile, 7.0 pbm of a polymerization initiator 2,2'-azobis (2-methylbutyronitrile), 1.0 pbm of a chain transfer agent "NOFMER MSD" (manufactured by NOF Corporation), and 10.0 pbm of xylene were added dropwise over 6 hours. After completion of the dropwise addition, 0.5 pbm of polymerization initiator t-butyl peroctoate (TBPO) and 7.0 pbm of xylene were added dropwise over 30 minutes, and further stirring was carried out for 1 hour and 30 minutes, and thereafter 4.4 pbm of xylene was added, to prepare a pale yellow transparent polymer solution (A-6) containing a hydrolyzable copolymer (copolymer containing a metal ester group).

A structure of the used monomer mixture, and property values of the polymer solution (A-6) and the hydrolyzable polymer contained therein are shown in Table 2. The table shows a blending amount (pbm) of each monomer in the monomer mixture.

[Table 2]

| | | | Production example A-6 | Production example A-7 |
|---|---|---|---|---|
| Monomer mixture | Metal ester group-wntaining monomer (a1-1) reaction solution | | 52.0 | 47.5 |
| | Other monomer (a2) | Ethyl methacrylate | 1.0 | 14.6 |
| | | Ethyl acrylate | 70.2 | 56.6 |
| | | Butyl acrylate | | 7.5 |
| | | 2-methoxyethyl acrylate | 5.4 | |
| Property | Solid content (mass%) | | 46.5 | 46.4 |
| | Viscosity (mPa·s/25°C) | | 403 | 867 |

[Production of hydrolyzable polymer (metal ester group-containing copolymer) solution (A-7)]

<Production Example A-7>

A monomer mixture having the composition shown in Table 2 was used, in place of the monomer mixture used in Production Example A-6, and in the same manner as in Production Example A-6 except that the kind and amount of the solvent, the polymerization initiator, and the chain transfer agent were appropriately adjusted, a polymer solution A-7 containing a hydrolyzable polymer was prepared.

The structure of the used monomer mixture, the polymer solution A-7 and property values of the hydrolyzable polymer contained therein are also shown in Table 2.

[Example 1]

<Preparation of the antifouling coating composition>

Xylene (10 pbw) as a solvent, gum rosin A (acid value 168 mg KOH/g, softening point 75°C, Mw 287) (3 pbw) and copolymer solution (A-1) (20 pbw) were weighed as a solvent in a poly container (capacity: 1000 ml), and mixed using a paint shaker until gum rosin A was dissolved. The gum rosin described below is rosin itself, a natural resin, and is assigned with reference numerals such as gum rosin A and gum rosin B depending on an acid value and a softening point.

Subsequently, gypsum D-1 (1 pbw) produced by Noritake Company Limited, Talc FC-1 (5 pbw) produced by Fukuoka Talc, Red iron oxide 404 (3 pbw) manufactured by Toda Kogyo Co., Zinc oxide (Zinc white No. 3) (4 pbw) manufactured by Kyushu White Water Chemical Co., Copper omazine (copper pyrithione) (2 pbw) manufactured by Arch Chemical Co., Ltd., Cuprous oxide NC 301 (50 pbw) manufactured by NC Tech Co., and Disparlon 4200-20X (1 pbw: solid content 20 mass%) manufactured by Kusumoto Chemicals, were added in the same poly container, and these ingredients were dispersed by stirring for 1 hour using a paint shaker.

After dispersion, Disparlon A 630-20 X (1 part by weight: solid content 20 mass%) produced by Kusumoto Chemicals was further added and stirring was carried out for 20 minutes using a paint shaker, and thereafter the mixture was filtered through a filtering mesh (mesh opening: 80 mesh) to remove a residue to obtain a filtrate (coating composition 1).

The obtained coating composition was used, to evaluate various properties in accordance with test conditions described in the following "paint property evaluation".

[Examples 2-13]

The coating composition was prepared in the same manner as in Example 1, except that the various components used in Example 1 were changed as shown in Table 3 below, and various coating properties were evaluated. Ethyl silicate 28 is produced by Colcoat Co., Ltd.

The compositions according to the above examples are shown in Table 3 below. Further, evaluation results according to the above respective examples are shown in the following Table 4.

[Table 3]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Copolymer solution | Copolymer solution (A-1) | 20 | | | | | 20 | | 17 | 17 | | | | |
| | Copolymer solution (A-2) | | 20 | | | | | | | | | | | |
| | Copolymer solution (A-3) | | | 20 | | 20 | | 20 | | | 17 | 17 | | 17 |
| | Copolymer solution (A-4) | | | | 20 | | | | | | | | | |
| | Copolymer solution (A-5) | | | | | | | | | | | | 17 | |
| Rosin component | Gum rosin A (acid value 168, Softening point 75 °C, Mw287) | 3 | 3 | 3 | 3 | 3 | | | 4.5 | | 4.5 | 4.5 | 4.5 | |
| | Gum rosin B (acid value 175, Softening point 77 °C, Mw288) | | | | | | 3 | | | 4.5 | | | | |
| | Gum rosin F (acid value 164, Softening point 76 °C, Mw348) | | | | | | | 3 | | | | | | 4.5 |
| Solvent | Xylene | 10 | 10 | 10 | 10 | 10 | 10 | 10 | 11.5 | 11.5 | 11.5 | 11.5 | 11.5 | 11.5 |

18

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Pigment component | Plasticizer D-1 | 1 | 1 | 1 | 1 | | 1 | | 1 | 1 | 1 | | | |
| | Ethyl silicate 28 | | | | | 1 | | 1 | | | | 1 | 1 | 1 |
| | Talc FC-1 | 5 | 5 | 5 | 5 | 5 | 5 | 5 | 5 | 5 | 5 | 5 | 5 | 5 |
| | Red iron oxide 404 | 3 | 3 | 3 | 3 | 3 | 3 | 3 | 3 | 3 | 3 | 3 | 3 | 3 |
| | Zinc oxide | 4 | 4 | 4 | 4 | 4 | 4 | 4 | 4 | 4 | 4 | 4 | 4 | 4 |
| Antifouling agent | Coppper omadine | 2 | 2 | 2 | 2 | 2 | 2 | 2 | 2 | 2 | 2 | 2 | 2 | 2 |
| | Cuprous oxide NC301 | 50 | 50 | 50 | 50 | 50 | 50 | 50 | 50 | 50 | 50 | 50 | 50 | 50 |
| Anti-settling agent | Disparlon 4200-20X | 1 | 1 | 1 | 1 | 1 | 1 | 1 | 1 | 1 | 1 | 1 | 1 | 1 |
| Anti-sagging agent | Disparlon A630-20X | 1 | 1 | 1 | 1 | 1 | 1 | 1 | 1 | 1 | 1 | 1 | 1 | 1 |
| | [Total] | 100 | 100 | 100 | 100 | 100 | 100 | 100 | 100 | 100 | 100 | 100 | 100 | 100 |

EP 3 783 075 B1

[Table 4]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Specific gravity of coating material | | 1.9 | 1.9 | 1.9 | 1.9 | 1.9 | 1.9 | 1.9 | 1.9 | 1.9 | 1.9 | 1.9 | 1.9 | 1.9 |
| Residual weight heating component (%) | | 80.4 | 80.4 | 80.4 | 80.4 | 80.4 | 80.4 | 80.4 | 80.1 | 80.1 | 80.1 | 80.1 | 80.1 | 80.1 |
| VOC (g/L) | | 387 | 387 | 387 | 387 | 387 | 387 | 387 | 393 | 393 | 393 | 393 | 393 | 393 |
| Storage stability (Ku) | Initial viscosity | 91 | 90 | 92 | 89 | 92 | 92 | 91 | 88 | 87 | 88 | 86 | 82 | 87 |
| | After 1 month storage at 40 °C | 93 | 91 | 93 | 93 | 93 | 94 | 93 | 91 | 89 | 91 | 90 | 84 | 91 |
| Increase degree of viscosity | | 2 | 1 | 1 | 4 | 1 | 2 | 2 | 3 | 2 | 3 | 4 | 2 | 4 |
| Sunshine weather meter | After irradiation for 1000 hours | 0 | 0 | 0 | 0 | 0 | 0 | 0 | 0 | 0 | 0 | 0 | 0 | 0 |
| | After irradiation for 1500 hours | 0 | 0 | 0 | 0 | 0 | 0 | 0 | 0 | 0 | 0 | 0 | 0 | 0 |
| | After irradiation for 2000 hours | 0 | 0 | 0 | 0 | 0 | 0 | 0 | 0 | 0 | 0 | 0 | 0 | 0 |
| 50 °C sea water immersion | First month | 0 | 0 | 0 | 0 | 0 | 0 | 0 | 0 | 0 | 0 | 0 | 0 | 0 |
| | Second month | 0 | 0 | 0 | 0 | 0 | 0 | 0 | 0 | 0 | 0 | 0 | 0 | 0 |
| | Third month | 0 | 0 | 0 | 0 | 0 | 0 | 0 | 0 | 0 | 0 | 0 | 0 | 0 |
| | Fourth month | 0 | 0 | 0 | 0 | 0 | 0 | 0 | 0 | 0 | 0 | 0 | 0 | 0 |
| | Fifth month | 0 | 0 | 0 | 0 | 0 | 0 | 0 | 0 | 0 | 0 | 0 | 0 | 0 |
| | Sixth month | 0 | 0 | 0 | 0 | 0 | 0 | 0 | 0 | 0 | 0 | 0 | 0.5 | 0 |

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Coating film consumption ($\mu$m) (25°C/ 15 knot) | First month | 4.7 | 5.1 | 6.3 | 7.3 | 6.3 | 4.1 | 5 | 6.7 | 7.7 | 7.8 | 6.7 | 7.3 | 6.3 |
| | Second month | 8.8 | 9.7 | 11.3 | 12.3 | 11.3 | 8.7 | 10.9 | 13.4 | 14.7 | 14.5 | 132 | 15.4 | 127 |
| | Third month | 13.5 | 14.4 | 18.7 | 19.8 | 18.7 | 12.3 | 17.3 | 19.8 | 20.3 | 21.5 | 19.8 | 25.6 | 19 |
| | Fourth month | 21.3 | 23.5 | 25.6 | 27.8 | 25.6 | 19.8 | 24.1 | 24.7 | 28.9 | 29.8 | 27.8 | 33.4 | 26.6 |
| | Fifth month | 28.9 | 32.3 | 34.5 | 36.8 | 34.5 | 26.7 | 33.5 | 33.5 | 35.6 | 37.8 | 35.6 | 43.8 | 33.9 |
| | Sixth month | 34.5 | 39.8 | 42.3 | 48.7 | 42.3 | 32.5 | 40.8 | 41.3 | 43.5 | 46.5 | 41.3 | 57.3 | 40.1 |
| | Appearance after six months | ○ | ○ | ○ | ○ | ○ | ○ | ○ | ○ | ○ | ○ | ○ | ○ | ○ |
| Static anti-fouling property | First month | 0 | 0 | 0 | 0 | 0 | 0 | 0 | 0 | 0 | 0 | 0 | 0 | 0 |
| | Second month | 0 | 0 | 0 | 0 | 0 | 0 | 0 | 0 | 0 | 0 | 0 | 0 | 0 |
| | Third month | 0 | 0 | 0 | 0 | 0 | 0 | 0 | 0 | 0 | 0 | 0 | 0 | 0 |
| | Fourth month | 0 | 0 | 0 | 0 | 0 | 0 | 0 | 0 | 0 | 0 | 0 | 0 | 0 |
| | Fifth month | 0 | 0 | 0.5 | 0 | 0.5 | 0 | 0.5 | 0 | 0 | 0 | 0 | 0 | 0 |
| | Sixth month | 0.5 | 0.5 | 0.5 | 0 | 0.5 | 0.5 | 0.5 | 0.5 | 0.5 | 0.5 | 0.5 | 0 | 0.5 |

EP 3 783 075 B1

[Comparative Examples 1 to 7]

In these comparative examples, the acid value of gum rosin which is rosin itself was set to be > 180 (mg KOH/g) in each case. Then, the coating composition was prepared in the same manner as in Example 1, except that the various components used in Example 1 were changed as shown in the following Table 5, and various coating properties were evaluated.

The compositions according to the above respective comparative examples are shown in the following Table 5.

[Table 5]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Copolymer solution | Copolymer solution(A-1) | 20 | | | | 17 | 17 | |
| | Copolymer solution(A-2) | | 20 | | | | | |
| | Copolymer solution(A-3) | | | 20 | | | | 17 |
| | Copolymer solution(A-4) | | | | 20 | | | |
| Rosin component | Gum rosin C (acid value 183, Softening point 78 °C, Mw314) | | | | | | 4.5 | |
| | Gum rosin D (acid value 185, Softening point 78 °C, Mw318) | 3 | 3 | 3 | 3 | 4.5 | | 4.5 |
| Solvent | Xylene | 10 | 10 | 10 | 10 | 11.5 | 11.5 | 11.5 |
| Pigment component | Plasticizer D-1 | 1 | 1 | 1 | | 1 | 1 | 1 |
| | Ethyl silicate 28 | | | | 1 | | | |
| | Talc FC-1 | 5 | 5 | 5 | 5 | 5 | 5 | 5 |
| | Red iron oxide 404 | 3 | 3 | 3 | 3 | 3 | 3 | 3 |
| | Zinc oxide | 4 | 4 | 4 | 4 | 4 | 4 | 4 |
| Antifouling agent | Copper omadine | 2 | 2 | 2 | 2 | 2 | 2 | 2 |
| | Cuprous oxide NC301 | 50 | 50 | 50 | 50 | 50 | 50 | 50 |
| Anti-settling agent | Disparlon 4200-20X | 1 | 1 | 1 | 1 | 1 | 1 | 1 |
| Anti-sagging agent | Disparlon A630-20X | 1 | 1 | 1 | 1 | 1 | 1 | 1 |
| | [Total] | 100 | 100 | 100 | 100 | 100 | 100 | 100 |

Further, the evaluation results according to the above respective comparative examples are shown in the following Table 6.

[Table 6]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Specific gravity of coating material | | 1.9 | 1.9 | 1.9 | 1.9 | 1.9 | 1.9 | 1.9 |
| Residual weight heating component (%) | | 80.4 | 80.4 | 80.4 | 80.4 | 80.1 | 80.1 | 80.1 |
| VOC (g/L) | | 387 | 387 | 387 | 387 | 393 | 393 | 393 |
| Storage stability (Ku) | Initial viscosity | 105 | 108 | 110 | 112 | 108 | 107 | 107 |
| | After 1 month storage at 40 °C | 121 | 127 | 123 | 131 | 121 | 122 | 135 |
| increase degree of viscosity | | 16 | 19 | 13 | 19 | 13 | 15 | 28 |
| Sunshine weather meter | After irradiation for 1000 hours | 0 | 0 | 0 | 0 | 0 | 0 | 0 |
| | After irradiation for 1500 hours | 0 | 0 | 0 | 0 | 0 | 0 | 0 |
| | After irradiation for 2000 hours | 3 | 3 | 3 | 3 | 3 | 3 | 3 |
| 50 °C sea water immersion | First month | 0 | 0 | 0 | 0 | 0 | 0 | 0 |
| | Second month | 0 | 0 | 0 | 0 | 0 | 0 | 0 |
| | Third month | 0 | 0 | 0 | 0 | 0 | 0 | 0 |
| | Fourth month | 0 | 0 | 0 | 3 | 0 | 0 | 3 |
| | Fifth month | 3 | 3 | 3 | 3 | 3 | 3 | 3 |
| | Sixth month | 3 | 3 | 3 | 3 | 3 | 3 | 3 |

(continued)

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Coating film consumption ($\mu$ m) (25°C/15 knot) | First month | 8.7 | 9.3 | 7.8 | 10.3 | 9.8 | 8.8 | 9.8 |
| | Second month | 13.5 | 12.3 | 13.3 | 15.4 | 13.6 | 14.5 | 15.4 |
| | Third month | 19.8 | 18.7 | 20.3 | 22.8 | 22.4 | 25.6 | 23.8 |
| | Fourth month | 25.6 | 23.4 | 27.6 | 32.4 | 32.5 | 34.5 | 32.3 |
| | Fifth month | 33.4 | 29.8 | 34.5 | 39.8 | 39.8 | 42.3 | 44.3 |
| | Sixth month | 42.3 | 39.8 | 42.3 | 47.6 | 49.8 | 50.3 | 51.3 |
| | Appearance after six months | Crack | Crack | Crack | Crack | Crack | Crack | Crack |
| Static antifouling property | First month | 0 | 0 | 0 | 0 | 0 | 0 | 0 |
| | Second month | 0 | 0 | 0 | 0 | 0 | 0 | 0 |
| | Third month | 0 | 0 | 0 | 0 | 0 | 0 | 0 |
| | Fourth month | 0 | 0 | 0 | 0 | 0 | 0 | 0 |
| | Fifth month | 0.5 | 0 | 0.5 | 0.5 | 0 | 0.5 | 0 |
| | Sixth month | 0.5 | 0.5 | 0.5 | 0.5 | 0.5 | 0.5 | 0.5 |

[Comparative Examples 8-13]

In these comparative examples, metal salt bond-containing polymer solutions (A-6) and (A-7) not containing the component unit derived from triisopropylsilyl (meth) acrylate (A1), that is, containing a hydrolyzable polymer (containing a metal ester group), were used in each case. Thereafter, in the same manner as in Example 1, except that the various components used in Example 1 were changed as shown in Table 7 below, the coating composition was prepared, and various coating properties were evaluated.

The compositions according to the above comparative examples are shown in Table 7 below.

[Table 7]

| | | Comparative Example 8 | Comparative Example 9 | Comparative Example 10 | Comparative Example 11 | Comparative Example 12 | Comparative Example 13 |
|---|---|---|---|---|---|---|---|
| Copolymer solution | Hydrolyzable polymer (A-6) | 22 | 22 | 22 | 22 | 22 | 22 |
| | Hydrolyzable polymer (A-7) | | | | | | |
| Rosin component | Gum rosin A (acid value 168, Softening point 75 °C, Mw287) | 4.5 | | | | | |
| | Gum rosin B (acid value 175, Softening point 77 °C, Mw288) | | 4.5 | | | | |
| | Gum rosin C (acid value 183, Softening point 78 °C, Mw314) | | | 4.5 | | | |
| | Gum rosin D (acid value 185, Softening point 78 °C, Mw318) | | | | 4.5 | | |
| | Gum rosin F (acid value 164, Softening point 76 °C, Mw348) | | | | | 4.5 | 4.5 |
| Solvent | Xylene | 6.5 | 6.5 | 6.5 | 6.5 | 6.5 | 6.5 |
| Pigment component | Plasticizer D-1 | 1 | 1 | 1 | 1 | 1 | 1 |
| | Talc FC-1 | 5 | 5 | 5 | 5 | 5 | 5 |
| | Red iron oxide 404 | 3 | 3 | 3 | 3 | 3 | 3 |
| | Zinc oxide | 4 | 4 | 4 | 4 | 4 | 4 |
| Antifouling agent | Copper omadinie | 2 | 2 | 2 | 2 | 2 | 2 |
| | Cuprous oxide NC301 | 50 | 50 | 50 | 50 | 50 | 50 |
| Anti-setttng agent | Disparlon 4200-20 | 1 | 1 | 1 | 1 | 1 | 1 |
| Anti-sagging agent | Disparlon A630-20X | 1 | 1 | 1 | 1 | 1 | 1 |
| | [Total] | 100 | 100 | 100 | 100 | 100 | 100 |

In addition, the evaluation results according to the above respective comparative examples are shown in the following Table 8.

[Table 8]

| | | Comparative Example 8 | Comparative Example 9 | comparative Example 10 | Comparative Example 11 | Comparative Example 13 | Comparative Example 13 |
|---|---|---|---|---|---|---|---|
| Specific gravity of coating material Weight heating residue (%) | | 2 80.1 | 2 80.1 | 2 80.1 | 2 80.1 | 2 80.1 | 2 80.1 |
| VOC (g/L) | | 405 | 405 | 405 | 405 | 405 | 405 |
| Storage stability (Ku) | Initial viscosity | 106 | 108 | 112 | 115 | 118 | 106 |
| | After 1 month storage at 40 °C | 108 | 111 | 124 | 127 | 132 | 109 |
| increase degree of viscosity | | 3 | 3 | 12 | 12 | 14 | 4 |
| Sunshine weather meter | After irradiation for 1000 hours | 0 | 0 | 0 | 0 | 0 | 0 |
| | After irradiation for 1500 hours | 0 | 0 | 0 | 0 | 0 | 0 |
| | After irradiation for 2000 hours | 0 | 0 | 0 | 0 | 0 | 0 |
| 50 °C sea water immersion | First month | 0 | 0 | 0 | 0 | 0 | 0 |
| | Second month | 0 | 0 | 0 | 0 | 0 | 0 |
| | Third month | 0 | 0 | 0 | 0 | 0 | 0 |
| | Fourth month | 0 | 0 | 0 | 0 | 0 | 0 |
| | Fifth month | 0 | 0 | 0 | 0 | 0 | 0 |
| | Sixth month | 0 | 0 | 0 | 0 | 0 | 0 |
| Coating film consumption ($\mu$ m) (25°C/15 knot) | First month | 14.3 | 15.1 | 14.1 | 14.8 | 13.8 | 13.8 |
| | Second month | 19.8 | 20.3 | 19.8 | 19.8 | 17.7 | 18.3 |
| | Third month | 24.3 | 24.5 | 25.3 | 25.6 | 21.3 | 22.9 |
| | Fourth month | 27.8 | 28.7 | 29.8 | 29.8 | 24.5 | 25.8 |
| | Fifth month | 30.1 | 32.3 | 33.8 | 34.5 | 27.9 | 28.8 |
| | Sixth month | 33.8 | 35.6 | 37.8 | 38.6 | 31.3 | 32.1 |
| | Appearance after six months | ○ | ○ | ○ | ○ | ○ | ○ |

EP 3 783 075 B1

| | | Comparative Example 8 | Comparative Example 9 | comparative Example 10 | Comparative Example 11 | Comparative Example 13 | Comparative Example 13 |
|---|---|---|---|---|---|---|---|
| Static antifouling property | First month | 0 | 0 | 0 | 0 | 0 | 0 |
| | Second month | 0 | 0 | 0 | 0 | 0 | 0 |
| | Third month | 0.5 | 0 | 0.5 | 0 | 0.5 | 0.5 |
| | Fourth month | 0.5 | 0.5 | 0.5 | 0.5 | 0.5 | 0.5 |
| | Fifth month | 1 | 0.5 | 0.5 | 0.5 | 1 | 1 |
| | Sixth month | 1 | 1 | 1 | 1 | 1 | 1 |

EP 3 783 075 B1

[Examples 14-17]

In these comparative examples, the acid value of gum rosin which is rosin itself was set to be 180 (mg KOH/g) or less in each case as defined in this embodiment. In addition, in Examples 14-16, the softening point was set to < 75° C while setting the softening point of the gum rosin at $\geq$ 75°C, and a prescribed significance of the softening point of the rosin compound (B) was investigated in Example 17.

Of course, even if the softening point of rosin itself (i.e. gum rosin) is < 75°C as in Example 17, there is no difference in the point that the acid value is $\leq$ 180 (mg KOH/g), and there is no difference in the point that Example 17 is also an example of the present invention.

In the same manner as in Example 1 except that the various components used in Example 1 were changed as shown in the following Table 9, the coating composition was prepared, and various coating properties were evaluated.

The contents according to the above examples are shown in Table 9 below.

[Table 9]

| | | Example 14 | Example 15 | Example 16 | Example 17 |
|---|---|---|---|---|---|
| Copolymer solution | Copolymer solution (A-1) | 17 | 17 | 17 | 17 |
| Rosin component | Gum rosin A (acid value 168, Softening point 75 °C, Mw287) | 4.5 | | | |
| | Gum rosin B (acid value 175, Softening point 77 °C, MW288) | | 4.5 | | |
| | Gum rosin E (acid value 164, Softening point 71 °C, Mw281) | | | | 4.5 |
| | Gum rosin F (acid value164, Softening point 76°C, Mw348) | | | 4.5 | |
| Solvent | Xylene | 11.5 | 11.5 | 11.5 | 11.5 |
| Pigment component | Plasticizer D-1 | 1 | | | |
| | Ethyl silicate 28 | | 1 | 1 | 1 |
| | Talc FC-1 | 5 | 5 | 5 | 5 |
| | Red iron oxide 404 | 3 | 3 | 3 | 3 |
| | Zinc oxide | 4 | 4 | 4 | 4 |
| Antifouling agent | Copper omadinie | 2 | 2 | 2 | 2 |
| | Cuprous oxide NC301 | 50 | 50 | 50 | 50 |
| Anti-settling agent | Disparion 4200-20 | 1 | 1 | 1 | 1 |
| Anti-sagging agent | Disparlon A630-20X | 1 | 1 | 1 | 1 |
| [Total] | | 100 | 100 | 100 | 100 |
| Specific gravity of coating material | | 1.9 | 1.9 | 1.9 | 1.9 |
| Weight heating residue (%) | | 80.1 | 80.1 | 80.1 | 80.1 |
| VOC (g/L) | | 393 | 393 | 393 | 393 |
| Damage resistance | Dry for one day | 3 | 4 | 3 | 1 |
| | Dry for two days | 4 | 4 | 4 | 2 |
| | Dry for three days | 5 | 5 | 5 | 3 |

[Evaluation of Properties of (co) polymer solution and (co) polymer]

A method for evaluating each property will be described below.

(1) Content of a heating residue in the (co) polymer solution

1.5 g ($X_1$ (g)) of the (co) polymer solution was kept in a thermostatic chamber under conditions of 1 atm and 108°C for 3 hours to remove a volatile matter to obtain a heating residue (nonvolatile content). Subsequently, an amount ($X_2$ (g)) of the remaining heating residue (nonvolatile content) was measured, and based on the following formula, the content (%) of the heating residue contained in the (co) polymer solution was calculated.

$$\text{Content of heating residue (\%)} = X_2 / X_1 \times 100$$

(2) average molecular weight of (co) polymer

An average molecular weight (number average molecular weight (Mn) and weight average molecular weight (Mw)) of the (co) polymer was measured by GPC (gel permeation chromatography) under the following conditions. The conditions are as follows.

GPC condition
Device: "HLC-8120 GPC" (manufactured by Tosoh Corporation)
Column: "SuperH 2000 + H 4000"
(Manufactured by Tosoh Corporation, 6 mm (inner diameter), each 15 cm (length))
Eluent: tetrahydrofuran (THF)
Flow rate: 0.500 ml / min
Detector: RI
Column constant temperature bath temperature: 40 ° C
Standard material: polystyrene

Sample preparation method: A small amount of calcium chloride was added to the (co) polymer solution, dehydrated, and filtered through a membrane filter to obtain a filtrate, which was used as a GPC measurement sample.

(3) Viscosity of (co) polymer solution

For copolymer solutions (A-1) to (A-5), the visicosity (unit: mPa/s) of a (co) polymer solution at a liquid temperature of 25°C was measured using a B type viscometer (manufactured by Tokyo Keiki Co., Ltd.). For copolymer solutions (A-6) to (A-7), the viscosity (unit: mPa/s) of the (co) polymer solution at a liquid temperature of 25 °C was measured using an E type viscometer (manufactured by Toki Sangyo Co., Ltd.).

(4) Acid value measurement for rosin

The measurement method described in this embodiment was adopted.

(5) Softening point measurement for rosin

The measurement method described in this embodiment was adopted.

(6) Molecular weight (Mw: weight average molecular weight) measurement for rosin

The molecular weight (Mw: weight average molecular weight) of each gum rosin was measured using GPC under the condition described in (2) average molecular weight of (co) polymer.

(7) Storage stability test

The viscosity (initial viscosity (Ku)) at 23°C of each coating composition immediately after (1 day or less) prepared in Examples and Comparative Examples, was measured using a stormer viscometer in accordance with JIS K 5400. Further, each coating composition was stored for 1 month in an incubator at 50°C, and thereafter the viscosity (viscosity (Ku) after storage) of each coating composition at 23°C was measured using a stormer viscometer in accordance with JIS K 5400. Subsequently, the increase degree of viscosity was calculated based on the following formula.

Degree of increase of viscosity = Viscosity (Ku) after storage - Initial viscosity (Ku)

(8) Sunshine weather meter accelerated exposure test

An epoxy coating material (epoxy AC coating material, trade name "BANNOH 500", manufactured by ChugokuMarine Paints, Ltd.

Co., Ltd.) was applied on a sand blasting plate (150 mm × 70 mm × 1.6 mm) to a dry film thickness of 150 μm using an applicator, which was then cured to form a cured coating film (150 μm).

Subsequently, an epoxy binder coating material (trade name "BANNOH 500N", manufactured by Chugoku Marine Paints,Ltd.) was applied on the cured coating film to a dry film thickness of 100 μm using the applicator, which was then cured. Thus, a cured coating film (100 μm) was formed to prepare a test plate.

Subsequently, each of the coating compositions of the above examples and comparative examples was applied on the test plate (on the surface of the cured coating film made of the epoxy binder coating material) using an applicator and dried at 23°C for 1 day to form an antifouling coating film (150 μm). Further, the coating composition was applied on the surface of the antifouling coating film to a dry film thickness of 150 μm and dried at 23°C for 7 days to form an antifouling coating film. Thus, a test plate with antifouling coating film was prepared.

The test plate with antifouling coating film thus obtained was attached to a sunshine weather meter (manufactured by Suga Test Instruments Co., Ltd.), and the appearance and adhesion of the coating film during irradiation for 1000 hours, 1500 hours, 2000 hours were investigated.

At that time, the appearance and adhesion of the coating film were investigated based on the following evaluation criteria. In the evaluation regarding the appearance of the coating film, the following evaluation criteria shall be used hereafter unless otherwise specified.

(Appearance evaluation criteria)

The degree of fracture on the surface of the antifouling coating film of the test plate with antifouling coating film, was visually observed and evaluated in accordance with JIS K 5600-8-4. A table of this standard is shown below.

[Table 10]

| Evaluation point (RN) | Degree of fracture |
|---|---|
| 0 | None |
| 1 | Density 1 |
| 2 | Density 2 |
| 3 | Density 3 |

(9) Coating film accelerated deterioration test (Evaluation of coating film appearance and adhesion)

The test plate with antifouling coating film obtained by the preparation in the above (8) Sunshine weather meter accelerated exposure test, was immersed in 50°C artificial sea water, and the appearance and adhesion of the coating film were examined every month from the immersion.

(10) Coating film consumption test

Each coating composition obtained in examples and comparative examples was applied on a hard vinyl chloride plate (50 mm × 50 mm × 1.5 mm) using an applicator so that the dry film thickness was set to 150 μm, which was then dried to prepare a test plate.

The obtained test plate was attached to a rotating drum, the rotating drum was immersed in the sea water, and rotated at a peripheral speed of 15 knots under a seawater temperature of 30°C, and consumable film thickness (μm) for each month was measured. Further, an average monthly coating film consumption from the start of immersion until 12 months after start, was calculated, and the appearance of the coating film after 12 months from the start of immersion was observed, to perform evaluation based on the following evaluation criteria.

(Evaluation criteria)

o : No cracks are generated on the surface of the antifouling coating film.
Crack: Cracks are generated on the surface of the antifouling coating film.

(11) Static anti-fouling property test

The test plate with antifouling coating film obtained by the preparation in the above (8) Sunshine weather-meter accelerated exposure test, was immersed in a static basket in Nagasaki Bay Nagasaki prefecture, and percentage (%) of the antifouling coating film area (adhesion area) to which aquatic organisms adhere was measured every month after immersion, with a total area of the antifouling coating film of the test plate set as 100%, and static antifouling properties were evaluated based on the following evaluation criteria.

(Evaluation criteria)

0 : The adhesion area is 0%.
0.5: The adhesion area is > 0 and $\leq$ 10%.
1: The adhesion area is $\geq$ 10 and < 20%.
2: The adhesion area is $\geq$ 20 and < 30%.
3: The adhesion area is $\geq$ 30 and < 40%.
4: The adhesion area is $\geq$ 40 and < 50%.
5: The adhesion area is $\geq$ 50 and $\leq$ 100%.

(12) Coating damage test (pressure test)

An epoxy type anticorrosive coating material (Chugoku Marine Paints, Ltd. product "BANHOH 500") was applied on a sandblasted steel sheet of 150 × 70 × 3.2 mm, so that the dry film thickness was set to 150 μm and dried at room temperature (about 20°C) for 1 day to form a coating film.
An epoxy type binder coating material (Chugoku Marine Paints, Ltd. product "BANNOH 500N") was further applied on the surface of this coating film so that the dry film thickness was set to 100 μm and dried at room temperature (about 20°C) for 1 day to form a coating film.
The antifouling coating composition prepared in Examples or Comparative Examples was further applied on the surface of this coating film so that the dry film thickness was set to 100 μm and dried at room temperature (about 20°C) for 1 day to form a coating film. Then, this operation was repeated twice to prepare a test plate so that the dried film thickness of the antifouling coating film was set to 200 μm.
The test plate was further dried at room temperature of 23°C for 1, 2, 3 days, a wood piece of 30 × 30 × 10 mm was placed on the coating film (central part), a pressure of 40 kgf / cm$^2$ (3.9 MPa) was applied in a vertical direction from above the wood piece for 20 minutes, a state on the surface of the coating film was observed, and the degree of deformation of the coating film was measured. FIG. 1 is a schematic cross-sectional view showing the evaluation criteria of the coating film damage test (pressure test).
In FIG. 1, reference numeral 10 denotes a dry coating film, and reference numeral 20 denotes a degree of deformation of a portion damaged by a piece of wood. Further, a numerical value at the left end of FIG. 1 shows the evaluation criterion, and the larger the number is, the better the evaluation is. More specifically, evaluation criterion 5 indicates a best condition without deformation of the coating film 10. Evaluation criterion 4 indicates a satisfactory state in which the coating film 10 is slightly deformed, but the wood chip 10 is not exposed. Evaluation criteria 3, 2, and 1 indicate a state in which deformation of the coating film 10 is large. In other words, the degree of damage (deformation) is the evaluation criterion 5 which is smallest, and then the evaluation criteria 4, 3, 2, 1 are increased in order from the evaluation criterion 5.
(12) Coating film damage test (pressure test) was performed only for Examples 14-17, and the damage resistance was performed on the coating film only 1 to 3 days after drying. As can be seen from the item of resistance to damage in Table 10, the result is naturally good as long as the drying time passes. On the other hand, by setting "the softening point of gum rosin at $\geq$ 75°C" which is a preferred form in Examples 14-16, it is almost impossible to receive damage in the pressure test in just a few days after drying. In contrast, in Example 17 in which the softening point of gum rosin is < 75°C, it is more susceptible to damage than Examples 14-16. However, even if the result of the pressure test is not good, the effect of this embodiment can be sufficiently obtained by multiplying the number of days. Therefore, it is certain that Examples 14-16 in which the softening point of gum rosin is ≥ 75°C is preferable and that Example 17 also belongs to the technical scope of the present invention.

[Evaluation for Examples and Comparative examples]

First, in each example, satisfactory results were obtained for all items in the evaluation. In addition, it was possible to effectively suppress the increase of viscosity (for example, the viscosity immediately after production of the antifouling coating composition) during production. Further, as described above, in Examples 14-16 in which the softening point of gum rosin was ≥ 75°C, there is almost no damage in the pressure test in just a few days after drying.

In this example, no rosin derivative is used, but when the acid value of the gum rosin is set to be < 180 (mg KOH/g) and made into a metal-free type, rosin itself can be expected to have properties equivalent to those of the above gum rosin, and therefore the same effect as this example can be obtained.

On the other hand, In Comparative Examples 1-7 in which the acid value of gum rosin is > 180 (mg KOH/g), the static antifouling property was equal to or lower than that of the example. However, all other properties were inferior to those of the example. In addition, the viscosity was increased compared to the examples.

Further, in Comparative Examples 8-13, in which those which do not contain component the unit derived from triisopropylsilyl (meth) acrylate (A1), That is, the metal salt bond-containing polymer solutions (A-6) and (A-7) are used, on the contrary, despite being equal to or lower than that of the examples except for the static antifouling property, the antifouling properties were all inferior to the examples. In addition, the viscosity was increased compared to the examples.

In view of the results of Comparative Examples 8-13, it is found that whether or not the acid value of gum rosin was ≤ 180 (mg KOH/g), both results were as described above and were the same. Namely, from the results of Comparative Examples 8-13, it is found that by setting the acid value of the rosin compound (B) to ≤ 180 (mg KOH/g), the effect of the present invention can be obtained, exactly because of the silylacrylic copolymer (A) having a component unit derived from triisopropylsilyl (meth) acrylate (A1).

As a result of the above, in each example, the increase of the viscosity is suppressed as compared to conventional, the long-term storage stability is obtained, and when the coating film is formed, excellent antifouling property and water resistance (long-term mechanical properties) can be exhibited.

Description of Signs and Numerals

10    Dry coating film
20    Deformed portion

**Claims**

1.    The use of a rosin compound which is at least one of a rosin and a metal-free type rosin derivative, each having an acid value of ≤ 180 (mg KOH/g) for the preparation of an antifouling coating composition by blending with a silylacrylic copolymer (A) having a component unit derived from triisopropylsilyl (meth) acrylate (A1) and a component unit derived from a polymerizable monomer (A2) having a polymerizable double bond,
      wherein the silylacrylic copolymer (A) is contained in an amount of 10-30 parts by weight (pbw) in 100 pbw in total of the solid content (heating condition at 125°C/1h drying) contained in the antifouling coating composition.

2.    The use of claim 1, wherein the rosin compound has a softening point of ≥ 75°C.

3.    The use of claim 1 or 2, wherein the rosin compound is a rosin having an average molecular weight (Mw) of ≤ 400.

4.    The use of claim 1 or 2, wherein the rosin compound is a rosin derivative having an average molecular weight (Mw) of ≤ 1000.

5.    A method for producing an antifouling coating composition comprising mixing

      - a silylacrylic copolymer (A) having a component unit derived from triisopropylsilyl (meth) acrylate (A1) and a component unit derived from a polymerizable monomer (A2) having a polymerizable double bond; and
      - a rosin compound (B) which is at least one of a rosin and a metal-free type rosin derivative, each having an

acid value of $\leq 180$ (mg KOH/g),

wherein the silylacrylic copolymer (A) is contained in an amount of 10-30 parts by weight (pbw) in 100 pbw in total of the solid content (heating condition at 125°C/1h drying) contained in the antifouling coating composition.

6. A composition, which is an antifouling coating composition comprising, blended with each other,

   - a silylacrylic copolymer (A) having a component unit derived from triisopropylsilyl (meth) acrylate (A1) and a component unit derived from a polymerizable monomer (A2) having a polymerizable double bond; and
   - a rosin compound (B) which is at least one of a rosin and a metal-free type rosin derivative, each having an acid value of $\leq 180$ (mg KOH/g),

   wherein the silylacrylic copolymer (A) is contained in an amount of 10-30 parts by weight (pbw) in 100 pbw in total of the solid content (heating condition at 125°C/1h drying) contained in the antifouling coating composition.

7. The composition of claim 6, wherein the rosin compound (B) has a softening point of $\geq 75$°C.

8. The composition of claim 6 or 7, wherein the average molecular weight (Mw) of the rosin is $\leq 400$.

9. The composition of claim 6 or 7, wherein the average molecular weight (Mw) of the rosin derivative is $\leq 1000$.

10. The composition of any of claims 6-9, wherein the ratio ($W_A/W_B$) of the content weight ($W_A$) of the silylacrylic copolymer (A) and the content weight ($W_B$) of the rosin compound (B) is 99.9/0.1 to 30/70.

11. An antifouling coating film formed by curing the composition of any of claims 6-10.

12. An antifouling substrate, wherein the antifouling coating film of claim 11 is formed on a substrate.

13. The antifouling substrate of claim 12, wherein the substrate is at least one of underwater structures, ships and fishing gears.


**Patentansprüche**

1. Verwendung einer Rosinverbindung, die mindestens eines aus einem Rosin und einem metallfreien Rosinderivat ist, welche jeweils einen Säurewert von $\leq 180$ (mg KOH/g) aufweisen, zur Herstellung einer Antifouling-Beschichtungszusammensetzung durch Mischen mit einem Silylacrylcopolymer (A), das eine von Triisopropylsilyl(meth)acrylat (A1) abgeleitete Bestandteileinheit und eine von einem polymerisierbaren Monomer (A2) mit einer polymerisierbaren Doppelbindung abgeleitete Bestandteileinheit aufweist, wobei das Silylacrylcopolymer (A) in einer Menge von 10-30 Gewichtsteilen in 100 Gewichtsteilen des gesamten Feststoffgehalts (Erwärmungsbedingung bei 125°C/1 Stunde Trocknen) der Antifouling-Beschichtungszusammensetzung enthalten ist.

2. Verwendung nach Anspruch 1, worin die Rosinverbindung (B) einen Erweichungspunkt von $\geq 75$°C aufweist.

3. Verwendung nach Anspruch 1 oder 2, worin die Rosinverbindung ein Rosin mit einerm durchschnittlichen Molekulargewicht (Mw) von $\leq 400$ ist.

4. Verwendung nach Anspruch 1 oder 2, worin die Rosinverbindung ein Rosinderivat mit einem durchschnittlichen Molekulargewicht (Mw) von $\leq 1000$ ist.

5. Verfahren zur Herstellung einer Antifouling-Beschichtungszusammensetzung, umfassend das Mischen

   - eines Silylacrylcopolymers (A), das eine von Triisopropylsilyl(meth)acrylat (A1) abgeleitete Bestandteileinheit und eine von einem polymerisierbaren Monomer (A2) mit einer polymerisierbaren Doppelbindung abgeleitete Bestandteileinheit aufweist; und
   - einer Rosinverbindung (B), die mindestens eines aus einem Rosin und einem metallfreien Rosinderivat ist, welche jeweils einen Säurewert von $\leq 180$ (mg KOH/g) aufweisen,

wobei das Silylacrylcopolymer (A) in einer Menge von 10-30 Gewichtsteilen in 100 Gewichtsteilen des gesamten Feststoffgehalts (Erwärmungsbedingung bei 125°C/1 Stunde Trocknen) der Antifouling-Beschichtungszusammensetzung enthalten ist.

6. Zusammensetzung, die eine Antifouling-Beschichtungszusammensetzung ist, umfassend, miteinander vermischt:

- ein Silylacrylcopolymer (A), das eine von Triisopropylsilyl(meth)acrylat (A1) abgeleitete Bestandteileinheit und eine von einem polymerisierbaren Monomer (A2) mit einer polymerisierbaren Doppelbindung abgeleitete Bestandteileinheit aufweist; und
- eine Rosinverbindung (B), die mindestens eines aus einem Rosin und einem metallfreien Rosinderivat ist, welche jeweils einen Säurewert von ≤ 180 (mg KOH/g) aufweisen,

wobei das Silylacrylcopolymer (A) in einer Menge von 10-30 Gewichtsteilen in 100 Gewichtsteilen des gesamten Feststoffgehalts (Erwärmungsbedingung bei 125°C/1 Stunde Trocknen) der Antifouling-Beschichtungszusammensetzung enthalten ist.

7. Zusammensetzung nach Anspruch 6, worin die Rosinverbindung (B) einen Erweichungspunkt von ≥ 75°C aufweist.

8. Zusammensetzung nach Anspruch 6 oder 7, worin das durchschnittliche Molekulargewicht (Mw) des Rosins ≤ 400 beträgt.

9. Zusammensetzung nach Anspruch 6 oder 7, worin das durchschnittliche Molekulargewicht (Mw) des Rosinderivats ≤ 1000 beträgt.

10. Zusammensetzung nach mindestens einem der Ansprüche 6-9, worin das Verhältnis ($W_A/W_B$) des Gewichtsgehalts ($W_A$) des Silylacrylcopolymers (A) und des Gewichtsgehalts ($W_B$) der Rosinverbindung (B) 99,9/0,1 bis 30/70 beträgt.

11. Antifouling-Beschichtungsfilm, der durch Härten der Zusammensetzung nach mindestens einem der Ansprüche 6-10 gebildet ist.

12. Antifouling-Substrat, worin der Antifouling-Beschichtungsfilm nach Anspruch 11 auf einem Substrat ausgebildet ist.

13. Antifouling-Substrat nach Anspruch 12, worin das Substrat mindestens eines aus Unterwasserstrukturen, Schiffen und Fischereiausrüstungen ist.

**Revendications**

1. Utilisation d'un composé de colophane qui est au moins l'un parmi une colophane et un dérivé de colophane sans métal, présentant chacun un indice d'acide ≤ 180 (mg KOH/g) pour la préparation d'une composition de revêtement antisalissure par mélange avec un copolymère silylacrylique (A) présentant une unité constitutive dérivée du (méth)acrylate de triisopropylsilyle (A1) et une unité constitutive dérivée d'un monomère polymérisable (A2) présentant une double liaison polymérisable, dans laquelle le copolymère silylacrylique (A) est contenu en une quantité de 10-30 parties en masse (pem) dans 100 pem au total de la teneur en solides (condition de chauffage à 125 °C/1 h de séchage) contenue dans la composition de revêtement antisalissure.

2. Utilisation selon la revendication 1, dans laquelle le composé de colophane présente un point de ramollissement ≥ 75 °C.

3. Utilisation selon la revendication 1 ou 2, dans laquelle le composé de colophane est une colophane présentant une masse moléculaire moyenne (Mm) ≤ 400.

4. Utilisation selon la revendication 1 ou 2, dans laquelle le composé de colophane est un dérivé de colophane présentant une masse moléculaire moyenne (Mm) ≤ 1000.

5. Procédé de production d'une composition de revêtement antisalissure, comprenant le mélange

- d'un copolymère silylacrylique (A) présentant une unité constitutive dérivée du (méth)acrylate de triisopropylsilyle (A1) et une unité constitutive dérivée d'un monomère polymérisable (A2) présentant une double liaison polymérisable ; et

- d'un composé de colophane (B) qui est au moins l'un parmi une colophane et un dérivé de colophane sans métal, présentant chacun un indice d'acide ≤ 180 (mg KOH/g),

dans lequel le copolymère silylacrylique (A) est contenu en une quantité de 10-30 parties en masse (pem) dans 100 pem au total de la teneur en solides (condition de chauffage à 125 °C/1 h de séchage) contenue dans la composition de revêtement antisalissure.

6. Composition, qui est une composition de revêtement antisalissure comprenant, mélangés l'un avec l'autre,

- un copolymère silylacrylique (A) présentant une unité constitutive dérivée du (méth)acrylate de triisopropylsilyle (A1) et une unité constitutive dérivée d'un monomère polymérisable (A2) présentant une double liaison polymérisable ; et

- un composé de colophane (B) qui est au moins l'un parmi une colophane et un dérivé de colophane sans métal, présentant chacun un indice d'acide ≤ 180 (mg KOH/g),

dans laquelle le copolymère silylacrylique (A) est contenu en une quantité de 10-30 parties en masse (pem) dans 100 pem au total de la teneur en solides (condition de chauffage à 125 °C/1 h de séchage) contenue dans la composition de revêtement antisalissure.

7. Composition selon la revendication 6, dans laquelle le composé de colophane (B) présente un point de ramollissement ≥ 75 °C.

8. Composition selon la revendication 6 ou 7, dans laquelle la masse moléculaire moyenne (Mm) de la colophane est ≤ 400.

9. Composition selon la revendication 6 ou 7, dans laquelle la masse moléculaire moyenne (Mm) du dérivé de colophane est ≤ 1000.

10. Composition selon l'une quelconque des revendications 6-9, dans laquelle le rapport ($W_A/W_B$) de la masse de la teneur ($W_A$) en copolymère silylacrylique (A) et de la masse de la teneur ($W_B$) en composé de colophane (B) est de 99,9/0,1 à 30/70.

11. Film de revêtement antisalissure formé par le durcissement de la composition selon l'une quelconque des revendications 6-10.

12. Substrat antisalissure, dans lequel le film de revêtement antisalissure selon la revendication 11 est formé sur un substrat.

13. Substrat antisalissure selon la revendication 12, dans lequel le substrat est au moins l'un parmi des structures sous-marines, des bateaux et des engins de pêche.

Fig. 1

EVALUATION CRITERIA

**EP 3 783 075 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013073580 A
- EP 2781567 A
- JP 2005015531 A
- JP 2005082725 A
- JP 2010150355 A
- WO 2015150249 A
- EP 3126458 A
- JP 2011026357 A
- EP 2161316 A